# EUROPEAN PATENT SPECIFICATION

(11) **EP 1 561 354 B1**
(45) Date of publication and mention of the grant of the patent: **11.08.2010**
(21) Application number: 03773747.5
(22) Date of filing: 13.11.2003
(51) Int. Cl.: H04L 29/06

(54) **STREAMING OF MEDIA CONTENT IN A MULTIMEDIA MESSAGING SERVICE**
STREAMING VON EINEM MEDIAINHALT IN EINEM MULTIMEDIA-NACHRICHTENSYSTEM
TRANSMISSION EN CONTINU DE CONTENU MULTIMEDIA DANS UN SERVICE DE MESSAGERIE MULTIMEDIA

(30) Priority: 14.11.2002 GB 0226571
(43) Date of publication of application: 10.08.2005
(73) Proprietor: Nokia Corporation, 02150 Espoo (FI)
(72) Inventor: MOSTAFA, Miraj, FIN-33710 Tampere (FI)
(74) Representative: Lamberg, Samu Petteri
(86) International application number: PCT/FI2003/000859
(87) International publication number: WO 2004/045230

(56) References cited:
- WO-A1-02/063849
- WO-A2-02/43414
- '3rd Generation partnership project; Technical specification group terminals; Multimedia messaging service (MMS); Functional description; Stage 2 (Release 5)' 3GPP TS 23.140 V5.4.0 September 2002, pages 31 - 33, 139-142, XP002972893
- '3rd Generation partnership project; Technical Specification group services and system aspects; transparent end-to-end packet switched streaming service (PSS); General description (relkease 5)' 3GPP TS 26.233 V5.0.0 March 2002, pages 1 - 12, XP002972894
- '3rd Generation partnership project; Technical specification group services and system aspects; transparent end-to-end packet switched streaming service (PSS); Protocols and codecs (Release 5)' 3GPP TS 26.234 V5.2.0 September 2002, pages 29 - 44, XP002972895

## Description

This invention relates to data transmission. More specifically, the invention relates to the streaming of media content in a Multimedia Messaging Service.

In mobile communications networks, the term Multimedia Messaging Service (MMS) is commonly used to describe a new approach for transmitting messages having multimedia content. The Multimedia Messaging Service allows messaging between different mobile users and / or between mobile users and the Internet. There is an already agreed solution for providing a Multimedia Messaging Service in 3^{rd} Generation mobile communication networks and its features are described in 3^{rd} Generation Partnership Project (3GPP) Technical Specification (TS) 23.140, "Multimedia Messaging Service (MMS), Functional Description, Stage 2". The Multimedia Messaging Service proposed in 3GPP TS 23.140, employs a store-and-forward approach to message delivery. Multimedia messages are constructed in such a way that the media content (media components), information necessary to describe the media content and addressing information, identifying the intended receiver of the message, are encapsulated together. The multimedia message is then sent from a sending MMS user agent to a recipient Multimedia Messaging Service relay / server, which in turn notifies the intended receiver (recipient MMS user agent) about the availability of the message. Later on, the multimedia message, or selected media components, are downloaded by the recipient MMS user agent terminal and presented to the user of the terminal.

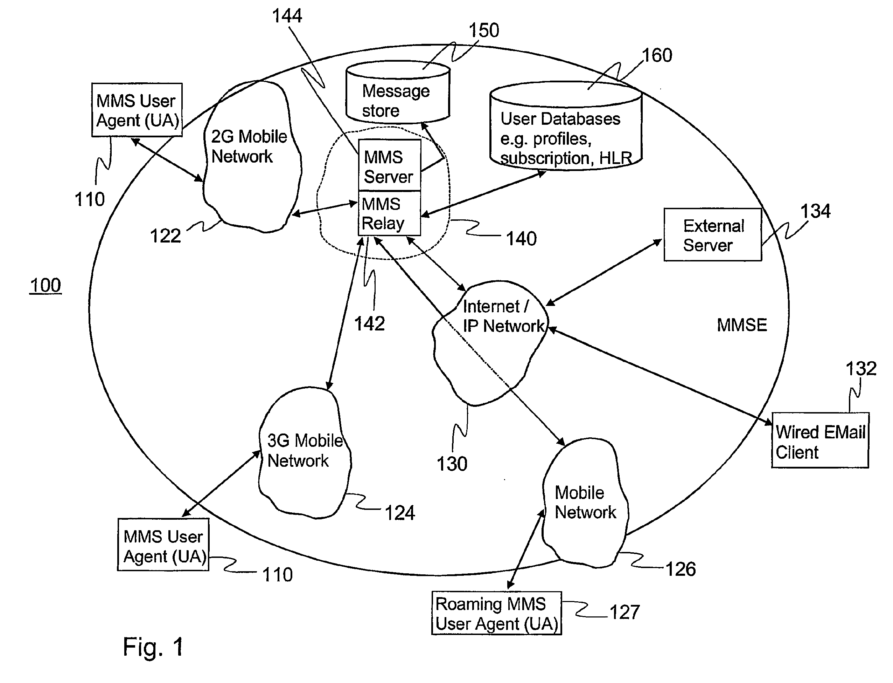

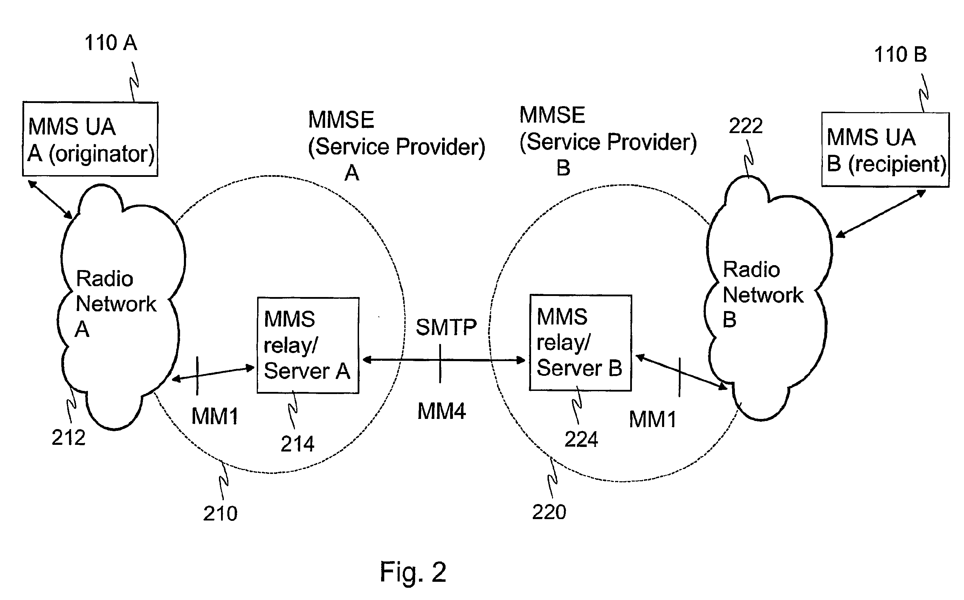

The structure and operation of a typical MMS system as proposed in 3GPP TS 23.140 will next be described with reference to Figures 1 and 2.

Fig. 1 shows an overview of MMS system elements according to 3GPP TS 23.140. The system comprises the following items:
- a plurality of MMS user agents (UAs) 110, each of which is capable of transmitting and receiving multimedia messages;
- a roaming MMS user agent 127;
- Access networks 122, 124 and 126 of different types including:
- A second generation mobile telecommunications network 122 such as a GSM phase 2 network;
- A third generation mobile telecommunications network 124 such as a Universal Mobile Telecommunications System (UMTS); and
- A mobile access network 126, for example a wireless-LAN network.
- The Internet (or another Internet Protocol (IP) -network) 130, having an external server 134, such as an e-mail server, and a wired e-mail client 132;
- A Multimedia Messaging Service relay 142 and an MMS server 144 which, in this example, are integrated into a single unit, referred to as a Multimedia Messaging Service Centre (MMSC) 140, but which can alternatively be implemented as separate or distributed entities;
- A message store 150 in connection with the MMS server 144; and
- User databases 160 comprising, for example, user subscription and addressing information.

The collective term Multimedia Messaging Service Environment (MMSE) is used to describe those functional elements that operate together to implement a multimedia messaging service. In Fig. 1, an MMSE is formed by the elements within the oval outlined region.

Referring in further detail to Fig. 1, each MMS user agent 110 connects to the MMS relay 142 through its access network 122, 124. The roaming MMS user agent 127 connects to the MMS relay 142 through the mobile access network 126 and via the Internet 130. The MMS relay is connected to the MMS server 144 and to the user databases 160. Furthermore, the external server 134 and the wired e-mail client 132 are connected to the Internet 130.

Fig. 2 shows an overview of inter-working between different MMSE's according to 3GPP TS 23.140. The communication of multimedia messages takes place between user agents 110A (sender) and 110B (recipient) which reside in two different Multimedia Messaging Service Environments. For simplicity and clarity, the two Multimedia Messaging Service Environments, MMSE A and MMSE B, are each shown to comprise a single MMS relay, linked to a single MMS server, thus forming two MMSC's 214 and 224. It should be appreciated that in a practical MMSE, the number of MMS relays and servers may be, and typically will be, greater than this. MMSE A and MMSE B may, for example, have different operators, different geographical locations or coverage areas and / or differ in terms of their technical characteristics and capabilities. Furthermore, in the situation where a particular MMSE comprises more than one MMS relay, the method according to the invention can also be applied within the MMSE (intra-MMSE).

In the example shown in Fig. 2, both MMS user agents 110A and 110B are depicted as devices that communicate with their respective MMSE 210, 220 via a radio communication network 212, 222. However, it should be appreciated that either MMSE user agent A or MMSE user agent B, or both of them, could reside in a fixed line network (not shown).

No particular restrictions are placed on the type of media content that may be included in a multimedia message. In general, the media components may be classified as belonging to one of two categories, namely: 1) those suitable for streaming to the recipient user agent and 2) those which are typically not suitable for streaming. Examples of media components that fall within the first category are audio and video clips, while media components typical of the second, non-streamable category include, for example, text and still images. The term "streaming" is generally used to describe the presentation of media content, or a combination of different media types, in a continuous way while the content is being transmitted to a recipient over a data network. Thus, a "stream" is a flow of data enabling the recipient to present some form of continuously evolving information, such as the audio or video clip referred to above. In practice, streaming can be either live, or performed in an on-demand fashion. The term "live streaming" describes the creation of a media stream from a live source, for example a stream of digital images produced in real time by a video camera, while the term "on-demand streaming" describes the creation of a media stream from, for example, a file comprising encoded (compressed) audio or video data stored on a server.

The use of streaming in mobile networks is potentially very beneficial. Typically mobile terminals have limited memory and processing power and mobile communication networks may also have limited data transfer rates. Thus, adoption of a streaming approach to media download and presentation can reduce the amount of available memory required by mobile terminals and may also reduce the delay in starting playback of a media component. For these reasons, there has also been interest in the incorporation of streaming into the 3^{rd} generation multimedia messaging service.

In order to download a streamable media component by streaming it is necessary to establish a so-called "streaming session" between the recipient terminal and the source of the media content. To establish a streaming session, the recipient terminal must know certain information about the media content to be streamed. In general, this information may include, but is not limited to, the type of the media content, the format in which it is encoded, the transport mechanism to be used in streaming the content to the recipient and the location (e.g. network address) from which the content is to be downloaded. This information, which the intended recipient must know in advance in order to establish a streaming session, is typically referred to as "Session Description Data" (SDD). As previously explained, according 3GPP TS 23.140, a multimedia message is formed by encapsulating media content, information necessary to describe the media content and addressing information, identifying the intended recipient of the message, into a single message structure. This approach to message construction is inherently incompatible with the streaming download of media content, as there is no way for a recipient MMS user agent to obtain the SDD it requires to establish a streaming session before the multimedia message has been downloaded in its entirety.

For this reason, earlier versions of 3GPP TS 23.140, such as V.3.1.0 (release '99), did not provide support for the streaming download of media content to a recipient MMS user agent. All media components, streamable and non-streamable, were simply delivered to the recipient MMS user agent and only presented once downloading of the entire message was complete.

The basic mechanism of Multimedia Message delivery according to 3GPP TS 23.140 V.3.1.0 will now be described in greater detail with reference to Fig. 2. Here it is assumed that MMS user agent A 110A, which has subscribed to the multimedia messaging service provided in Multimedia Messaging Service Environment A 210, wishes to send some media content to MMS user agent B 110B, which has a subscription to the multimedia messaging service provided in MMSE B 220. When initiating the communication of a multimedia message to MMS user agent B, MMS user agent A first selects the media content to be transmitted. For example, the media content may be of a non-streamable type, such as a still image and some associated text, stored in the memory of user agent A, or it may be suitable for streaming, such as an audio or video clip. In either case, according to 3GPP TS 23.140 V.3.1.0, user agent A encapsulates the media content as a multimedia message, comprising the media content itself, information necessary to describe the media content and addressing information, identifying the intended recipient of the message. MMS user agent A then sends the message to MMS relay A through radio network A 212.

On receiving the multimedia message, MMS relay A determines, from the addressing information included with the message, that the intended recipient is not a user agent of MMSE A, but a user agent of MMS relay B and forwards the multimedia message to MMS relay B. Routing of the multimedia message to the correct MMS relay, i.e. that responsible for MMS user agent B is achieved, for example, using standardised mechanisms provided for in the existing 3GPP multimedia messaging solution. On receiving the multimedia message, MMS relay B stores the media content in MMS server B and sends a notification to the intended recipient, MMS user agent B, thereby indicating that a multimedia message has arrived and its content is available to be downloaded from MMS relay B. In response to receiving the notification, MMS user agent B retrieves the media content from (via) the MMS relay B. The retrieval of the media content is initiated by signalling with MMS relay B.

3GPP TS 23.140, V.4.1.0 (Release 4, December 2000), included provisions for enabling the streaming download of media content. It proposed a solution in which the SDD, required by a recipient MMS user agent to establish a streaming session, was provided in the notification message sent by the recipient MMS relay. More specifically, according to 3GPP TS 23.140 V.4.1.0, when a recipient MMS relay, such as MMS relay B, receives a multimedia message containing streamable media content, it forms a modified MMS notification message and sends it to the intended recipient user agent to notify it about any streamable multimedia components contained in the multimedia message. The modified notification message contains the SDD necessary to initialise a streaming session between the recipient MMS user agent and an MMS server that has access to the streamable multimedia components.

WO 02/063849 discloses an alternative method for enabling streaming download of media components in a multimedia messaging system, which operates without the need to modify the notification message sent to the recipient MMS user agent. The method proposed in WO 02/063849 forms the basis for the support of streaming in the most recent versions of the 3GPP multimedia messaging standard.

According to the method disclosed in WO 02/063849, a recipient MMS relay examines the multimedia messages it receives and replaces any streamable media components in the messages with descriptors before notifying the recipient user agent about the multimedia message. Each descriptor comprises SDD sufficient to allow the recipient MMS user agent to form a streaming session for downloading a particular one of the streamable media components in the multimedia message. Alternatively, descriptors comprising SDD for more than one streamable component can be used. Advantageously, a descriptor takes the form of a Session Description Protocol (SDP) file, a standard format known from streaming applications in the Internet. WO 02/068349 also mentions the possibility that SDD can be provided by means of a Uniform Resource Identifier (URI) or a Uniform Resource Locator (URL) inserted into the multimedia message in place of a streamable component. In this case, the URI or URL provides information enabling the recipient MMS user agent to retrieve SDD from a location within a data communication network, for example the MMSE itself or, more generally, the Internet.

In WO 02/068349, after receiving the notification, the recipient MMS user agent requests delivery of the multimedia message, by sending an MMS retrieve request to the recipient MMS relay. The MMS relay then sends an MMS retrieve response comprising the modified multimedia message. On receiving the modified multimedia message, the recipient MMS user agent can present the non-streamable media components and further decide which, if any, of the streamable components are to be retrieved. If the modified message comprises the SDD in the form of an SDP file, the recipient user agent MMS has immediate access to the information it requires to form a streaming session. If the descriptor(s) take the form of URIs or URLs, the recipient user agent must first retrieve the SDD from the location indicated by the URI or URL and can then form a streaming session to retrieve the streamable component in question.

According to a first aspect of the invention there is provided a multimedia messaging network entity according to claim 1.

Advantageously, Session Description Data (SDD) need not be generated for a particular streamable media component before it is known whether the MMS user agent will actually retrieve the media component in question and the resources of the multimedia messaging system can thus be spared by only generating the SDD when needed.

Further, the MMS user agent that retrieves the streamable components of a particular multimedia message need not be the same as the MMS user agent to which the original notification was sent. If a user decides to retrieve the streamable components of the multimedia message with a terminal other than the MMS user agent to which the notification message was sent, or with preferences other than the typical ones, it is still possible to start streaming the streamable component correctly despite possible differences in the streaming-specific capabilities of the terminals.

Advantageously, the streaming adaptation information of the user agent allows generation of the SDD dependent on the properties of and / or preferences related to the terminal that actually retrieves a streamable component of the multimedia message.

According to a second aspect of the invention there is provided a multimedia messaging user agent according to claim 15.

Preferably, the multimedia messaging user agent is a portable device. Even more preferably, the user agent is a hand portable or wearable device.

Preferably, the multimedia messaging user agent comprises a mobile telephone, a wireless communication enabled PDA device, an electronic book or an electronic newspaper.

Preferably, the user agent is a stand-alone device. Alternatively, the user agent is at least partly implemented by means of an add-on module such as a PC-card or by means of program code operable at a communication device.

According to a third aspect of the invention there is provided a mobile multimedia messaging service system according to claim 25.

According to a fourth aspect of the invention there is provided a method according to claim 29.

Preferably, the method further comprises receiving a notification informing that the multimedia message is available. Preferably the notification conforms to 3GPP 23.140 MMS specifications.

Advantageously, the streaming adaptation information of the user agent allows generation of the SDD dependent on the properties of and / or preferences related to the terminal that actually retrieves a streamable component of the multimedia message.

Preferably, the streaming adaptation information comprises information on the user agent's capabilities to stream data and / or user preferences relating to streaming.

Preferably, the determination if the multimedia message comprises a streamable component that can be streamed to the user agent takes into account the streaming adaptation information.

Advantageously, using the streaming adaptation information it is possible to identify the media components which the user agent is actually able to stream and which are not excluded by user preferences. Hence, the user agent is able to stream all media components determined as being streamable. Further advantageously, the user preferences may exclude particular media components from being streamed despite their streaming being supported by the capabilities of the user agent. This exclusion can depend on criteria such as media type, size, estimated cost or duration of transfer. In both the aforementioned situations, unnecessary generation of the SDD can be avoided. This results in a reduction of the computational load on the messaging system as not all user agents are able to stream all potentially streamable media components. Additionally, all user agents will not always require streaming of all possibly streamable components.

Preferably, the step of obtaining of the streaming adaptation information takes place on receiving the retrieve request. Advantageously, obtaining the streaming adaptation information on receiving the retrieve request allows the same procedure to be used irrespective of whether there are streamable components and how they should be streamed.

Preferably, the step of obtaining of the streaming adaptation information is based on information contained in the retrieve request. Advantageously, detailed streaming adaptation information or a reference to such detailed streaming adaptation information may be received in, or together with, the retrieve request. Preferably, the step of obtaining of the streaming adaptation information takes place after receiving the retrieve request. Advantageously, the obtaining the streaming adaptation information after receiving the retrieve request allows receiving the adaptation information by an entity that also generates the SDD. This allows a great level of flexibility as the provisioning of the adaptation information takes place between the two parties that will be responsible for streaming, resulting in ease of upgrading of streaming in the multimedia messaging service.

Preferably, the step of obtaining of the streaming adaptation information is based on information contained in communication received subsequent to the retrieve request. Advantageously, the streaming adaptation information may be received from the user agent in a communication such as an RTSP describe signal.

Preferably, the step of replacing the streamable component with a descriptor takes place at an MMS relay. Preferably, the step of generating the SDD takes place at an entity other than the MMS relay such as an MMS server.

Advantageously, a recipient MMS relay need not support any session description protocols and need not be capable of understanding in detail the streaming-specific capabilities of the recipient MMS user, as the generation of the Session Description Data SDD is performed by the media server. These two factors reduce the complexity of the MMS relay implementation compared with MMS implementations in which the MMS relay is required to generate the SDD.

Furthermore, because the recipient MMS relay is not required to generate SDD, it need not necessarily perform extensive manipulation of the message content SDD when replacing streamable media components with descriptors. This reduces the expected workload of the MMS relay and may increase the number of recipient MMS user agents that an individual MMS relay can handle. Alternatively message delivery times may be reduced as a result of the lesser workload placed on the recipient MMS relay.

Preferably, the generation and provision of SDD is distributed and is performed by different servers. Advantageously, a dynamically expandable and flexible system results, as the requirements for a Multimedia Messaging Service Centre (combination of one or more MMS relay and one or more MMS server) will be reduced compared to the prior art.

Advantageously, adopting the method of sending a multimedia message according to the invention increases the flexibility of a multimedia messaging system and reduces the requirements placed on MMS relays within the system.

Furthermore, new streaming capabilities can be introduced into the multimedia messaging system without requiring changes to the multimedia messaging relay that is responsible for notification and message delivery. This advantage arises because the generation of SDD can be performed by dedicated multimedia servers (media servers) separate from the multimedia messaging relay. In this way, the multimedia messaging system can be upgraded to use ever more sophisticated streaming protocols. An upgrade to a more sophisticated streaming protocol can be implemented by making the necessary changes to the media server and MMS user agents, while changes to the multimedia messaging relay are not necessarily required.

According to a fifth aspect of the invention there is provided a method according to claim 35.

Advantageously, providing the network with streaming adaptation information after the notification has been sent allows customisation of the SDD so that it is appropriate to the user agent.

Preferably, the streaming adaptation information provides streaming-specific capability information relating to particular user agent terminal or information concerning the streaming preferences of a user of that terminal. Advantageously, by providing the user agent capability information, the SDD can subsequently be generated in the network such that the user agent will be capable of streaming in accordance with the Session Description Data. Advantageously, providing the streaming preference information allows customised generation of Session Description Data so that streaming can be performed in conformance with user preferences.

Preferably, the multimedia message comprises both streamable and non-streamable components. Advantageously, non-streamable components can be immediately presented to the user whilst the streamable components are retrieved separately and presented either separately or together with non-streamable components.

Preferably, the multimedia message is transferred over a wireless communication channel to the user agent. Preferably, the multimedia messaging network is implemented in a cellular radio network such as GSM, UMTS, PDC, IS-95, or CDMA-2000.

Preferably, the SDD contains information determining how a streamable component should be presented. Advantageously, caption texts, control icons, background melodies and / or executable applets relating to the multimedia message can be provided as non-streamable components and linked to a streamable component or components by the SDD so that the message can be composed at the recipient device in a concentrated manner. Hence, a great degree of design freedom can be obtained to create imposing multimedia messages. This is particularly advantageous in advertisement messages.

According to a sixth aspect of the invention there is provided a computer program product according to claim 40.

According to a seventh aspect of the invention there is provided a computer program product according to claim 41.

The computer program code of the sixth and seventh aspect may be computer executable program code as such, for instance assembled machine language. The program code may be code executable by a computer using an interpreter and / or compiler.

Preferably, the method further comprises the step of obtaining streaming adaptation information of the user agent that requests the multimedia message and the session description data is generated according to the streaming adaptation information.

Preferably, a streamable component of the multimedia message is replaced with a descriptor pointing to a location from which the session description data can be obtained.

The multimedia messaging service may be provided using a multimedia messaging network entity that exchanges multimedia messages and / or signalling with user agents. The session description data generator may reside together with the network entity. Alternatively, the session description data generator may reside separate from the network entity. The network entity may comprise a media server and a multimedia messaging relay either combined or separated from each other.

It should be appreciated that the embodiments of any one aspect may produce advantages when combined with other aspects of the invention and that they can be combined where applicable, even though not all embodiments are expressly written after all aspects.

The invention will now be described, by way of example, with reference to the accompanying drawings, in which:
- Fig. 1: shows an overview of MMS system elements according to 3GPP TS 23.140, v. 4.1.0;
- Fig. 2: shows an overview of inter-working MMS system elements according to 3GPP TS 23.140, v. 4.1.0;
- Fig. 3: shows the flow of signalling on receiving a multimedia message, according to a preferred embodiment of the present invention;
- Fig. 4: shows a flow chart describing the operation of an MMS relay / server, according to a preferred embodiment of the present invention;
- Fig. 5: shows a block diagram of the structure of an MMS user agent, according to the preferred embodiment of the present invention; and
- Fig. 6: shows the structure of an MMS relay / server 224 according to a preferred embodiment of the present invention.

Figures 1 to 2 were described in the foregoing to illustrate the prior art. They also form a framework within which the present invention can be implemented.

The operation of a multimedia messaging system according to the invention will now be described in an exemplary manner. In the following description, it will be assumed that the multimedia messaging system is implemented in a 3rd generation mobile communication system. It should be appreciated that the MMS system according to the invention may also be implemented in various other mobile communications systems based on different technologies and communication protocols. For example, an MMS system according to the invention may also be provided in a GSM-based mobile communication network. If the GSM network is implemented according to the requirements of the General Packet Radio System (GPRS), the details of signalling between the elements of the MMS system and the mobile communication network will correspond substantially with the description provided below. In mobile communication systems based on different technologies and communication protocols, interaction of the MMS system and the underlying communication network may be affected in an equivalent manner, although the exact details of the signalling required may differ from those presented in the following example.

Analogous to the previously presented description of prior art, the situation will be examined in which MMS user agent A in Multimedia Messaging Service Environment A (MMSE A), sends a multimedia message to MMS user agent B, which is resident in Multimedia Messaging Service Environment B (MMSE B).

When initiating the communication of a multimedia message to MMS user agent B, MMS user agent A first selects the media content to be transmitted. As previously described, the media content may be of a non-streamable type, such as a still image and some associated text, stored in the memory of user agent A, or it may be of a type suitable for streaming, such as an audio or video clip, or a combination of both non-streamable and streamable media content types. Some of the media contents may also take the form of URIs or URLs indicating network locations from where particular media components may be obtained.

MMS user agent A encapsulates the media content as a multimedia message, comprising the media content itself, information necessary to describe the media content and addressing information, identifying the intended recipient of the message. It then sends the message to MMS relay A through radio network A. On receiving the multimedia message, MMS relay A determines, from the addressing information included with the message, that the intended recipient is not a user agent of MMSE A, but a user agent of MMS relay B in MMSE B and forwards the multimedia message to MMS relay B.

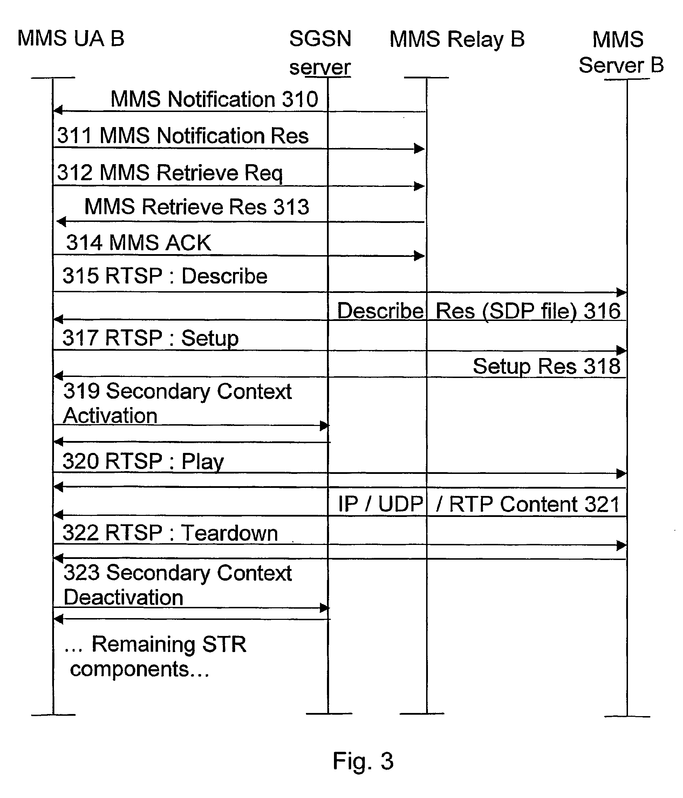

The signalling related to delivery of the multimedia message to MMS user agent B according to the preferred embodiment of the present invention will now be described with reference to Fig. 3. When the multimedia message addressed to MMS user agent B arrives at MMS relay B, it stores the media content of the message in MMS server B and sends an MMS notification signal 310 to recipient MMS user agent B. Responsive to receipt of the notification signal, MMS user agent B replies with an MMS notification response signal 311. Later, or optionally as part of signal 311, MMS user agent B sends an MMS retrieve request signal 312 to MMS relay B. MMS relay B responds by sending a modified multimedia message, comprising non-streamable media components and descriptors representing any streamable media components, in an MMS retrieve response 313. Responsive to receiving the MMS retrieve response 313, MMS user agent B sends an MMS acknowledgement signal 314 to MMS relay B. According to the preferred embodiment of the present invention, the descriptors used to represent streamable media components do not themselves provide Session Description Data (SDD) to be used by MMS user agent B in establishing a streaming session. Instead, they take the form of pointers, for example URI's or URL's to locations where SDD can be obtained.

Using the descriptors, MMS user agent B can invoke a streaming process to download the streamable media components one by one. The streaming process to download a particular media component is initiated, controlled and terminated by exchanging signals 315 to 323, as illustrated in Fig. 3. In the preferred embodiment of the invention signals 315, 316, 317, 318, 320, 321 and 322 are implemented using the Real-Time Streaming Protocol (RTSP). In an alternative embodiment of the invention the Hypertext Transport Protocol (HTTP) is used instead of RTSP to provide these signals. Two or more streaming processes can take place at the same time so that the recipient MMS user agent can play or present two or more streamable media components simultaneously. In this case signals 315 to 323 are exchanged for each streamable media component. Typically, the playing of the streamable media components is synchronised by means of commonly used protocols such as Synchronised Multimedia Integration Language (SMIL) definitions provided together with the SDD.

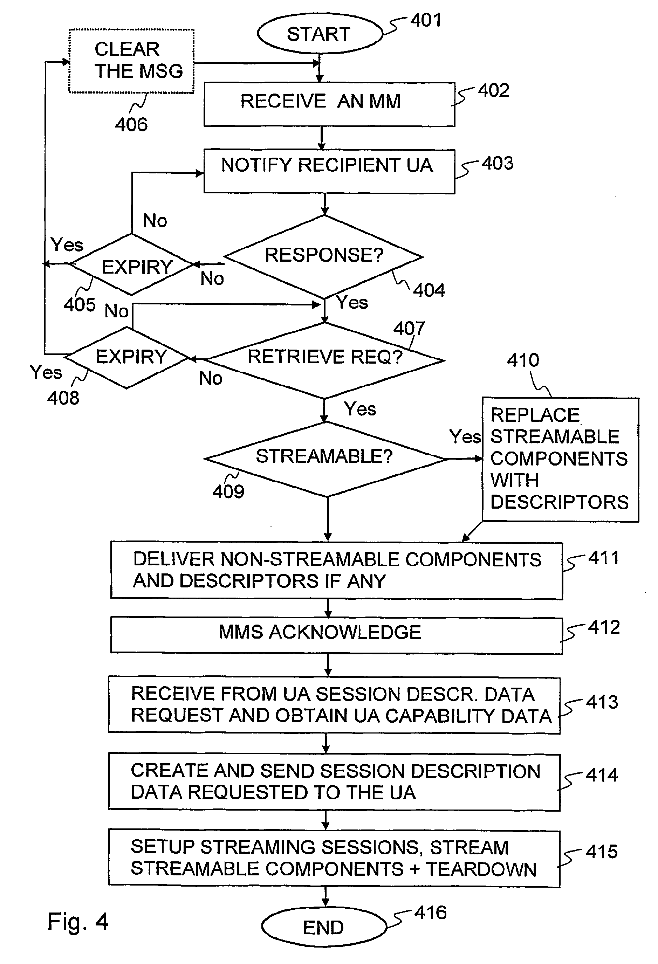

To enable the streaming process for a certain streamable media component represented by a particular descriptor, MMS user agent B requests SDD relating to the media component from MMS server B. In Fig. 4, this request is represented by signal 315 and according to the preferred embodiment of the invention, it is made using a Real-Time Streaming Protocol (RTSP) DESCRIBE method that identifies the streamable media component in question. In response to the RTSP DESCRIBE method signalling, MMS server B provides a response signal 316 containing the SDD.

In the preferred embodiment of the invention, signal 315 is also used to inform MMS server B about capabilities of MMS user agent B. This forms an association between the streamable media component requested in signal 315 and the recipient MMS user agent requesting the media component. It further allows the multimedia messaging system to create the SDD required by MMS user agent B to form a streaming session with MMS server B at the time a streaming session is actually being initiated. As a result, the SDD is only created when needed. It also follows that if a particular streamable media component is not retrieved for some reason, no SDD is created for that component. Furthermore, since the SDD is created only at a stage substantially immediately prior to or during establishment of a streaming session to download the media component, MMS server B can create the SDD so that it is tailored specifically for the recipient MMS user agent. This means that the user can stream a particular streamable component to an MMS user agent other than that which received the MMS notification and / or the MMS retrieve response 313. Although the user may have changed the recipient MMS user agent, an appropriate streaming session may still be established and the streamable component will be received in a format suitable for the equipment used.

Advantageously, the capability information provided to MMS server B is obtained from a user equipment capability database 160 that contains information about the technical capabilities of different MMS user agents and / or user preferences concerning different MMS subscribers. In this case, signal 315 is typically formed in accordance with 3GPP Technical Specification 26.234 Version 5.1.0 section A.4. Accordingly, MMS user agent B includes one or several Uniform Resource Locators (URLs) in signal 315. These URLs point to locations in one or several user databases 160 from where MMS server B can retrieve capability profiles or streaming adaptation information, that is, information describing device capabilities and / or user preferences. This list of URLs is encapsulated in RTSP protocol data units using additional header field(s) and transmitted from MMS user agent B to MMS server in the RTSP DESCRIBE method signalling.

Alternatively, signal 315 may contain all the necessary capability and / or user preference information for MMS server B so that MMS server B can autonomously generate the SDD suitable for the recipient MMS user agent.

Advantageously, the capability information relating to a recipient MMS user agent includes at least information about the streaming-specific capabilities of the MMS user agent. Alternatively, the capability information may be more comprehensive including, for example, information relating to the display or audio reproduction capabilities of the MMS user agent.

In response to signal 315, MMS server B forms SDD taking into account the capabilities of the recipient MMS user agent, as described above, and replies by sending the SDD to MMS user agent B, in signal 316, for example in the form of a Session Description Protocol (SDP) file. Using the SDP file, MMS user agent B then sends an RTSP SETUP signal 317 to MMS server B in order to initialise a streaming session. MMS server B responds by sending an RTSP SETUP response signal 318 to MMS user agent B.

After having successfully initialised a streaming session with MMS server B using the RSTP SETUP method, MMS user agent B starts streaming the media component from MMS server B. In the present example, in which the MMS system is implemented in a 3rd generation mobile communication network, it is first necessary to activate a secondary Packet Data Protocol (PDP) context. Activation of the secondary PDP context enables the transport of data packets containing the media content from MMS server B to MMS user agent B. In order to set up the secondary PDP context MMS user agent B signals 319 with a Serving General packet radio service Support Node (SGSN) of the mobile communications network. Activation of the secondary PDP context and its use in delivery of the media component using packet based communication is conducted in a manner known from 3rd generation / GPRS specifications. In embodiments of the invention implemented in mobile communication systems based on different communication technologies and / or protocols, alternative to GRPS, other packet or circuit switched data services can be employed.

Following activation of the secondary PDP context, MMS user agent B starts streaming the media component by sending RTSP PLAY signalling 320 to MMS server B. The streamable component is then streamed 321 from MMS server B to MMS user agent B using the Internet Protocol (IP) / User Datagram Protocol (UDP) / Real-time Transport Protocol (RTP).

After streaming of the media component has been completed, MMS user agent B terminates the streaming session by performing RTSP TEARDOWN method signalling 322 with MMS server B. MMS user agent B next deactivates the secondary PDP context, as it is no longer needed to transfer the media component. Deactivation of the secondary PDP context is affected by signalling 323 with the SGSN (see Fig. 4).

As in the present MMS standard and as described in the aforementioned WO 02/068349, SDD is provided to the recipient MMS user agent before it can start down-streaming a streamable media component. However, the SDD is not embedded in the multimedia message instead of a streamable component. According to the present invention, only a brief streaming indication is provided for each streamable component. The brief streaming indication contains information that enables the recipient to obtain the SDD it requires to initiate a streaming session with the server where the streamable content is stored. In the preferred embodiment of the invention, as described above, the brief streaming indication takes the form of a pointer (such as a Uniform Resource Locator, URL) to a location where the SDD may be obtained. Advantageously, the provision of the brief streaming indication and its inclusion in the multimedia message requires the recipient MMS relay to perform only a few operations. The brief streaming indication typically specifies an access type to use, such as RTSP or HTTP, an address of the server such as "mediaserver.com" and the identification of the content such as "/news/video24112002_123456".

It is advantageous to arrange the multimedia message such that the descriptor(s) representative of streamable media components are delivered in the early part of the multimedia message so that the streaming session(s) can be initiated as soon as possible, after downloading of a multimedia message has commenced.

Furthermore, according to the invention, the SDD is only generated on or after sending of the MMS retrieve request 312 by the recipient MMS user agent, according to the streaming-specific capabilities of the particular User Equipment (UE) that is used as a streaming terminal.

There are many ways to retrieve the SDD. In addition to the RTSP DESCRIBE method, illustrated in connection with the preferred embodiment of the invention, other protocols such as HTTP GET or electronic mail (E-mail) can be used.

As described above, the SDD is arranged in form of a session description file, such as a Session Description Protocol (SDP) file, which is a widely used session description file type. The session description file provides a description of the presentation for a particular streamable media component or components and allows the recipient MMS user agent to accomplish media initialisation for the streaming process. SDP has a registered Internet Assigned Numbers Authority (IANA) Multi-purpose Internet Mail Extensions (MIME) type.

Advantageously, the session description file contains the following data: a protocol version, information about the owner and / or creator of the media content, a session identifier, a session name and attributes, session information, an originator identifier, such as the e-mail address or phone number of the sender of the multimedia message, connection information, bandwidth information, different time-related information, and a title and attribute for each media component described by the session description file. The session description file may further comprise some cryptographic information, such as a Message Authentication Code (MAC), a cryptographic checksum for checking the validity of the content, or a challenge for allowing the recipient MMS user agent to generate a session key to be used for decrypting or validating the content.

In alternative embodiments, other forms of files are used for this purpose. TEXT files and files compliant with the Multimedia and Hypermedia Information Coding Experts Group (MHEG) ISO/IEC standard 13522 may also be used for this purpose. All these file types have a registered MIME type.

Generation of SDD dependent on the capabilities of the UE actually used to downstream a streamable media component provides the MMS system with a great degree of flexibility, since MMS server B can adapt to the UE used each time a streamable component is to be down-streamed.

The entire multimedia message can be uploaded to the recipient MMSC 224 either by streaming or by any other appropriate method. In the preferred embodiment of the present invention, use of streaming in downloading media content to a given recipient MMS user agent is independent of the manner in which the content was uploaded to the MMS relay B 224.

Fig. 4 shows a flow chart describing the operation of MMS relay B according to the preferred embodiment of the present invention. The operation starts from block 401. In block 402, MMS relay B receives a multimedia message. In block 403, MMS relay B attempts to notify the recipient user agent (MMS user agent B) with MMS notification 310 that the multimedia message is now available to for delivery. MMS relay B then checks in block 404 if an MMS notification response 311 has been received, acknowledging the receipt of the MMS notification 310. If the MMS notification response 311 has been received, the operation proceeds to block 407, otherwise it is checked in block 405 if the MMS notification 310 has expired. If yes, the operation returns to block 402 via an optional block 406 where the multimedia message is cleared. Instead of clearing the multimedia message at block 406, MMS relay B may erase the multimedia message at a later stage, for example when more storage capacity is needed or when the multimedia message reaches a predetermined age. If the multimedia message has not expired at block 407, MMS relay B again attempts to notify the recipient user agent at block 403. The loop including blocks 403, 404 and 405 is repeated until either the MMS notification 310 expires or an MMS notification response 311 is received. Typically, expiry of the MMS notification is a condition depending on a time limit and / or a number of attempts. For example, MMS relay B may send the MMS notification 310 up to ten times within an interval of up to 60 minutes so that the recipient user agent will be likely to succeed in receiving the MMS notification 310.

The MMS retrieve request 312 may be integrated with the notification response 311, if the MMS retrieve request message 312 would in any case be transmitted shortly (for example, 1, 5 or 10 minutes) after the MMS notification acknowledgement 311, or if automatic downloading of incoming multimedia messages has been selected.

Blocks 404 and 405 may further check if a cancellation of the multimedia message has been received from the originator of the message or from an MMS operator acting as a moderator. It the multimedia message has been cancelled, the operation returns to block 402 via block 406 and the multimedia message is cleared.

After successfully notifying the recipient MMS user agent about the multimedia message, MMS relay B starts polling (blocks 407 and 408) the reception of an

MMS retrieve request message 312 until expiry of conditions relating to delivery the message are fulfilled. These conditions typically include an expiry time and / or a date after which the multimedia message will no longer be maintained. If the expiry conditions are fulfilled the operation jumps from block 408 to block 406 and the multimedia message is cleared.

Next, in block 409, MMS relay B checks if the multimedia message contains any components that can be made available to the recipient MMS user agent by streaming. If yes, the media components that can be made available by streaming are replaced with descriptors and the procedure continues to block 410.

In block 410, MMS relay B modifies the multimedia message by replacing the media components of the multimedia message that can be streamed to the recipient user agent with respective descriptors. It further stores the streamable components, in an MMS server (MMS server B) associated with the MMS relay B 224. MMS server B may be integrated with the MMS relay B or may be a different physical entity, in which case the MMS relay B sends the streamable components to the separate MMS server for storage.

The determination of streamability in block 409 may depend on various criteria, such as the capabilities of MMS server B, the capabilities of the recipient MMS user agent received in the MMS retrieve request 312 and the type of the media content (audio, video etc.). MMS relay B may maintain a pre-defined list of content types which are streamable for use in determination of streamability. Optionally, the recipient MMS user agent can indicate the content types it is able to stream in the MMS retrieve request signal 312. Alternatively, MMS server B can be arranged to make the determination of streamability at block 409. In this alternative implementation, MMS relay B need not be informed of the capabilities of MMS server B.

According to the invention, an MMS system can be constructed with numerous interconnected MMS relays so that the capabilities of the various MMS servers associated with the relays can be used to their full advantage. More specifically, if a multimedia message comprising one or more potentially streamable media components is delivered to a particular MMS relay whose associated MMS server is not streaming capable, storage of the multimedia message can be transferred to a streaming capable MMS server associated with another MMS relay in the MMS system. When a new MMS server is added into an MMS system, or the capabilities of a particular MMS server are enhanced, the system automatically starts making use of the enhanced features thereby provided to the system.

It should be appreciated that since the question of streamability is not examined by MMS relay B before receiving the MMS retrieve request 312, the user who receives notification of the multimedia message may freely choose to use any UE as the recipient MMS user agent for retrieving the multimedia message. Thus, the capabilities of the UE actually used to retrieve a particular media component of a multimedia message can be taken into account both in the determination of whether that component may be downloaded by streaming and in the generation of the SDD. If, for example, the recipient user agent is changed from a device with very limited software and hardware resources to another with superior capabilities, MMS relay B can adapt to the change. Thus, the change in user equipment may affect the decision made by MMS relay B concerning the streamability of a particular potentially streamable media component. In the example just given, it is quite likely that exchanging an MMS user agent with lower specifications for one having higher specifications will enable more potentially streamable components to be actually downloaded by streaming.

Alternatively, instead of performing the operations associated with blocks 409 and 410 entirely in MMS relay B, these tasks may be performed by MMS server B, More specifically, the system can be implemented so that MMS server B determines which media components are streamable and replaces these components with descriptors. This is advantageous since it further moves streaming related intelligence from MMS relay B to the MMS server B. Furthermore, the streamability of media components may not only depend on the capabilities and / or preferences of the recipient MMS user agent, but also on the capabilities and / or preferences of MMS server B. Hence, MMS relay B can substantially avoid processing related to streaming.

In block 411, after or substantially simultaneously with the storage of the streamable components, MMS server B delivers the modified multimedia message comprising non-streamable media components and descriptors representing streamable components to the recipient user agent.

At block 412 MMS relay B then receives an MMS acknowledge signal 314 from recipient MMS user agent B. The procedure then continues to block 413, where the recipient MMS UA sends the signal 315 to MMS server B, requesting provision of the SDD relating to a particular streamable media component. As described in the foregoing, the recipient MMS user agent provides MMS relay B with capability information, thereby making an association between the capabilities of the recipient MMS user agent and the particular streamable media component to be downloaded. Having the capability association, MMS server B can generate the SDD taking into account the capabilities of the recipient MMS user agent. In an alternative embodiment of the invention, the recipient MMS UA 110B sends signal 315 to MMS server 224 before sending acknowledgement signal 314 to MMS relay B 224.

In block 414, MMS server B next generates the SDD and sends it in signal 316 to the recipient user agent that requested delivery of the media component, typically in form of an SDP file.

After providing the SDD to the recipient MMS user agent, MMS server B initialises a streaming session, starts streaming the data, and tears down the streaming session when streaming of the media component is complete. These steps are repeated for each streamable component requested. As explained in the foregoing, more than one streaming process can be performed in parallel so that the recipient MMS user agent can present two or more streams simultaneously. Advantageously, in this case, RTSP SETUP signalling is completed for each streamable component to be delivered before streaming of the media components is actually started by issuing the RTSP PLAY method signalling. Alternatively, where simultaneous presentation of more than one streamable media component is not required, the steps of initialising a streaming session, streaming the data for a particular media component and tearing down the streaming session are performed consecutively for each streamable media component requested by the recipient user agent.

After all the streamable components and non-streamable components are delivered, the procedure of delivering the multimedia message ends at block 416. Typically, an MMS relay and an MMS server are implemented as a server computer controlled by a computer program, which enables the MMS relay and MMS server to operate according to the aforementioned steps. In a manner typical of such computer-based implementations, the MMS relay and MMS server are able to multitask, continuously monitoring incoming messages and processing them so that the MMS relay and MMS server can serve numerous recipient MMS user agents simultaneously. It should also be appreciated that the MMS relay and MMS server may simultaneously be involved in delivering more than one multimedia messages addressed to particular recipient user agent. In this case, the MMS relay and MMS server establish two or more parallel processes according to Fig. 4 for a single MMS user agent, so that the processing of different, simultaneously pending, multimedia messages is in largely independent, particularly with regard to the reception and notification steps 402 to 408.

Whilst typically the same MMS server, or server, may store all the components of a particular multimedia message, some of the components may be distributed on different servers. For example, a streamable component may be stored on a particular content provider's own MMS server and in this case the pointer to such a component would refer to a different server than that storing other streamable or non-streamable components.

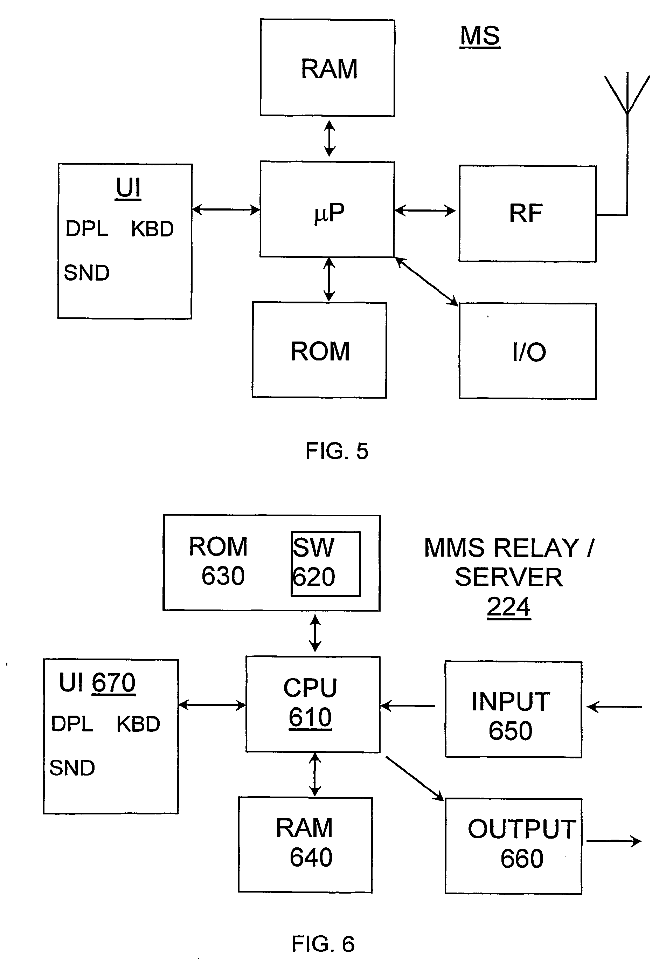

Fig. 5 shows the structure of an MMS user agent according to a preferred embodiment of the present invention in which the MMS user agent is implemented in a wireless communication device. A microprocessor µP controls the blocks responsible for the MMS user agent's various functions. These functional blocks comprise a random access memory RAM, a radio frequency block RF, a read only memory ROM, an input / output port I/O for external connections, a user interface UI, having an audio system SND and a display DPL for presenting multimedia messages and a keyboard KBD for receiving data and commands from a user. The microprocessor's operating instructions, that is program code for implementing the MMS user agent's basic functions are stored in advance, for example during the manufacturing process, in the ROM. In accordance with its program, the microprocessor uses the RF block for transmitting and receiving messages on a radio path. The microprocessor monitors the state of the user interface UI and controls the MMS user agent according to the program code. On receiving a multimedia message, the microprocessor µP examines the message for a brief streaming indicator or descriptor representing a streamable multimedia component. If it finds such a descriptor, it will cause operation in compliance with steps 413 to 415 of Fig. 4.

Typically, the recipient MMS user agent sets up streaming sessions immediately after receiving SDD. Alternatively, the recipient MMS user agent can store the SDD in its memory for use at some later time to initiate a streaming session. In this case, there will be a substantial delay between reception of the SDD and starting the down-streaming of a particular streamable media component.

If a particular multimedia component is of a type not supported by the MMS user agent itself, the microprocessor may control the input / output port I/O to forward such a component to an external device that supports that type of multimedia component. Such an external device may be a personal computer, typically a laptop computer. This also provides the advantage of allowing use of enhanced user interface and sound capabilities, if the external device provides such facilities. The input / output port may be an infrared port, a wired port, or a Low Power Radio Frequency connection port such as a Bluetooth port. When it is necessary to transfer presentation of a potentially streamable multimedia component to an external device, the capability parameters provided to MMS server B preferably correspond to the capabilities of the external device. Furthermore, on this case, the SDD received from MMS server B is passed to the external device to enable that device to establish a streaming session with MMS sever B, either via the MMS user agent or via another route, such as fixed Internet access.

Preferably, multimedia components of excessive quality are down-converted to a lower, but sufficient quality level, such that their transmission is faster and they can be readily used by the recipient user agent without any further conversion or manipulation before presentation to the user. Similarly, multimedia components may be converted from one media format to another, such that the result conforms to the capabilities and / or preferences of the recipient user agent. The conversion can be made either beforehand or on / during transmission of the MMS retrieve response.

Fig. 6 shows the structure of an MMS relay / server 224 according to a preferred embodiment of the present invention. The MMS relay / server 224 comprises a central processing unit CPU 610 controlling the operation of the server. The server also comprises software 620 stored on a non-volatile memory 630 connected with the processor. A volatile memory 640 is also connected to the CPU 610 for use as a random access memory in which the CPU 610 may execute the software 620 and temporarily maintain data needed in its operation. The MMS relay / server 224 has an input port 650 and an output port 660 connected to the CPU 610. For configuring and maintenance purposes, the MMS relay / server 224 further comprises a user interface 670 comprising a display DPL, keyboard KBD and audio interface SND. The MMS relay / server 224 may be adapted by software change from an MMS relay / server known in the prior art. The software 620 may be distributed to the MMS relay / server 224 on assembling the MMS relay / server 224, preinstalled on the non-volatile memory 630, on a removable memory media such as magnetic or optical disks or over a communication channel via the input port 650 or a dedicated configuration input port (not shown).

Particular implementations and embodiments of the invention have been described. It is clear to a person skilled in the art that the invention is not restricted to details of the embodiments presented above, but that it can be implemented in other embodiments using equivalent means without deviating from the characteristics of the invention. The scope of the invention is only restricted by the attached patent claims.

## Claims

1. A multimedia messaging network entity (224) for sending multimedia messages to multimedia messaging user agents (110B) in a mobile multimedia messaging service, comprising:
a port (650) for receiving a multimedia message retrieve request (312) for a particular multimedia message from a multimedia user agent;
means (610,650,160) for obtaining streaming adaptation information of the user agent (110B) that requested the multimedia message, responsive to the retrieve request (312);
means (610) responsive to the retrieve request for determining if the multimedia message addressed to a multimedia user agent (110B) comprises a streamable component that can be streamed to the user agent (110B) and for generating, according to the streaming adaptation information, session description data (316) to establish a streaming session for delivering the streamable component of the multimedia message, responsive to determining that the multimedia message comprises a streamable component;
means (610) for replacing the streamable component with a descriptor pointing to the location of the session description data for the streamable component, responsive to determining that the multimedia message comprises a streamable component;
means (610,660) for sending the multimedia message with the descriptor replacing the streamable component to the user agent (110B), responsive to determining that the multimedia message comprises a streamable component;
means (610,660) for starting to stream the streamable component in accordance with the session description data to the user agent (110B).

2. A network entity according to claim 1, wherein the descriptor points to a location (150) from which the session description data for the streamable component can be obtained.

3. A network entity according to claim 2, wherein the descriptor specifies an access type to use, an address of the entity storing the streamable component and the identification of the streamable component.

4. A network entity according to any of the preceding claims, wherein the means (610) for determining if the multimedia message addressed to a multimedia user agent (110B) comprises a streamable component that can be streamed to the user agent is configured to take into account the capabilities of the network entity.

5. A network entity according to any of the preceding claims, wherein the means for starting to stream the streamable component is configured to start streaming responsive to the user agent establishing a streaming session with the network entity.

6. A network entity according to any of the preceding claims, wherein the port (650) is further configured to receive a pointer to the streaming adaptation information from the user agent.

7. A network entity according to any of the preceding claims, wherein the session description data is in a Session Description Protocol (SDP) file.

8. A network entity according to any of the preceding claims, further comprising means for arranging the multimedia message such that the descriptor is delivered in an early part of the multimedia message so as to advance the starting of the streaming session.

9. A network entity according to any of the preceding claims, further comprising an output (660) for outputting a notification (310) to the user agent to inform of the multimedia message; and means (650,610) for detecting delivery of the notification message (310) by receiving a combined notification acknowledgement (311) and retrieve request (312).

10. A network entity according to any of the preceding claims, wherein the
streaming adaptation information comprises information on the user agent's capabilities to stream data and / or user preferences relating to streaming.

11. A network entity according to any of the preceding claims, wherein the means for obtaining the streaming adaptation information is configured to obtain the streaming adaptation information based on information contained in the retrieve request (312) or information subsequently received from the user agent (110B).

12. A network entity according to any of the preceding claims, comprising a multimedia content server and multimedia messaging relay with a physical relationship selected from the group of: an integrated unit, separate units and separate units at different geographic locations.

13. A network entity according to any of claims 1 to 11, comprising a multimedia messaging relay, wherein the means for replacing the streamable component with a descriptor reside outside the multimedia messaging relay.

14. A network entity according to any of claims 1 to 11, comprising a multimedia messaging relay, wherein the means for replacing the streamable component with a descriptor reside at the multimedia messaging relay.

15. A multimedia messaging user agent (MS) for receiving multimedia messages from a multimedia messaging network (210,212,220,222) in a mobile multimedia messaging service wherein multimedia message notifications (311) for notifying the presence of multimedia messages are sent to user agents, comprising:
a transmitter (RF) for sending to the network a multimedia message retrieve request (312) and streaming adaptation information concerning the user agent (MS) after the network has sent a notification (311) for the multimedia message;
a receiver (RF) for receiving a multimedia message transmission responsive to the multimedia message retrieve request (312);
means (µP) for obtaining from the received multimedia message transmission a descriptor pointing to a location (150) in the network;
means (µP,RF) for obtaining the session description data generated in accordance with the streaming adaptation information, from the location (150) indicated by the descriptor; and
means (µP,RF) for establishing a streaming session in accordance with the session description data to retrieve a streamable media component.

16. A user agent according to claim 15, wherein the descriptor points to a location from which the session description data for the streamable component can be obtained.

17. A user agent according to claim 15 or 16, wherein the transmitter is configured to transmit a combined notification acknowledgement (311) and retrieve request (312) responsive to receiving the notification (310).

18. A user agent according to any of claims 15 to 17, wherein the streaming adaptation information comprises at least one of capability information, user preferences concerning the user agent, a pointer to a location (160) where capability information is stored and a pointer to a location (160) where user preferences concerning the user agent is stored.

19. A user agent according to any of claims 15 to 18, wherein the means for obtaining the session description data is configured to obtain the session description data from a Session Description Protocol file.

20. A user agent according to any of claims 15 to 19, wherein the descriptor specifies access information containing an access type to use, an address of the entity storing the streamable component and the identification of the streamable component; and wherein the means for obtaining the session description data is configured to operate according to the access information.

21. A user agent according to any of claims 15 to 20, further comprising an output port configured to forward a multimedia message component to an external device for presentation thereby.

22. A user agent according to claim 21, wherein the output port is a wireless port.

23. A user agent according to any of claims 21 or 22, wherein the wireless port is a Low Power Radio Frequency port.

24. A user agent according to any of claims 21 to 23, further comprising means for adapting the streaming adaptation information to correspond with the capabilities of the external device.

25. A mobile multimedia messaging service system (100) comprising a multimedia messaging user agent (110B) and a multimedia messaging network (210,212,220,222) for processing multimedia messages addressed to the multimedia messaging user agent (110B), the network comprising:
means (650) for receiving a multimedia message retrieve request from the user agent;
means (610,160,650) for obtaining streaming adaptation information of the user agent (110B) responsive to the retrieve request (312);
means (610) responsive to the retrieve request for determining if the multimedia message addressed to the user agent (110B) comprises a streamable component that can be streamed to the user agent and for generating, according to the streaming adaptation information, session description data (316) to establish a streaming session for delivering the streamable component of the multimedia message;
means (610) for replacing the streamable component with a descriptor pointing to the location of the session description data for the streamable component, responsive to determining that the multimedia message comprises a streamable component;
means (610) for sending the multimedia message with the descriptor replacing the streamable component to the user agent, responsive to determining that the multimedia message comprises a streamable component; and
means (610,660) for starting to stream the streamable component in accordance with the session description data to the user agent;
the user agent (110B) comprising:
a transmitter (RF) for sending to the network the multimedia message retrieve request (312) for receiving the multimedia message and the streaming adaptation information concerning the user agent;
a receiver (RF) for receiving a multimedia message responsive to the multimedia message retrieve request;
means (µP) for obtaining from the received multimedia message transmission the descriptor pointing to the session description data;
means (µP,RF) for obtaining the session description data pointed to by the descriptor; and
means (µP,RF) for initiating a streaming session in accordance with the session description data to retrieve the streamable component.

26. A system according to claim 25, further comprising a content server for storing and transmitting multimedia message content and a notification server for notifying the user agent of the multimedia message, wherein the content server and the notification server have a physical relationship selected from the group consisting of the following: a single unit, separate units, and separate units distributed at different geographic locations.

27. A system according to claim 25 or 26, further comprising:
a first media server and a second media server, the first media server being unable to stream the streamable media component to the user agent and the second media server being able to stream the streamable media component to the user agent; and
means for transferring the multimedia message to the second media server to enable streaming the streamable component to the user agent.

28. A system according to any of claims 25 to 27, further comprising a multimedia messaging relay configured to replace the streamable component with the descriptor.

29. A method for sending multimedia messages in a mobile multimedia messaging service to a multimedia messaging user agent, comprising:
receiving a multimedia message retrieve request for a particular multimedia message from a multimedia messaging user agent; and
responsive to the retrieve request:
obtaining streaming adaptation information of the user agent that requested the multimedia message;
determining if the multimedia message addressed to a user agent comprises a streamable component that can be streamed to the user agent;
responsive to determining that the multimedia message comprises a streamable component, generating, according to the streaming adaptation information, session description data to establish a streaming session for delivering the streamable component of the multimedia message;
responsive to determining that the multimedia message comprises a streamable component, replacing the streamable component with a descriptor pointing to the location of the session description data for the streamable component and sending the multimedia message with the descriptor replacing the streamable component to the user agent; and
starting to stream the streamable component in accordance with the session description data to the user agent.

30. A method according to claim 29, wherein the streaming adaptation information comprises information on at least one of the user agent's capabilities to stream data and user preferences relating to streaming.

31. A method according to any of claims 29 to 30, wherein the obtaining of the streaming adaptation information is based on information contained in the retrieve request.

32. A method according to any of claims 29 to 31, wherein the obtaining of the streaming adaptation information is based on information contained in communication received subsequent to the retrieve request.

33. A method according to any of claims 29 to 32, wherein the step of replacing the streamable component with a descriptor takes place at a multimedia messaging relay.

34. A method according to any of claims 29 to 32, wherein the step of generating the session description data takes place at an entity other than the multimedia messaging relay.

35. A method for receiving multimedia messages by a multimedia messaging user agent from a multimedia messaging network in a mobile multimedia messaging service wherein user agents receive multimedia message notifications notifying the presence of multimedia messages and send retrieve requests to subsequently receive multimedia messages, comprising:
sending to the network a multimedia message retrieve request for receiving a multimedia message and streaming adaptation information concerning the user agent after the network has sent a notification for the multimedia message;
receiving from the network a multimedia message transmission responsive to the multimedia message retrieve request;
obtaining from the received multimedia message transmission a descriptor pointing to a location in the network;
obtaining session description data to establish a streaming session for retrieving a streamable component generated in accordance with the streaming adaptation information, from the location indicated by the descriptor; and
establishing a streaming session in accordance with the session description data to retrieve a streamable media component.

36. A method according to claim 35, wherein the streaming adaptation information provides at least one of user agent capability information and streaming preference information.

37. A method according to any of claims 29 to 36, wherein the session description data comprises information necessary to establish a streaming session for streaming of the streamable component.

38. A method according to any of claims 29 to 37, wherein the multimedia message is transferred over a wireless communication channel to the user agent.

39. A method according to any of claims 35 to 38, wherein the streaming adaptation information comprises at least one of capability information, user preferences concerning the user agent, a pointer to a location where capability information is stored and a pointer to a location where user preferences concerning the user agent is stored.

40. A computer program product for controlling a multimedia messaging network entity for sending multimedia messages to multimedia messaging user agents in a mobile multimedia messaging service, comprising:
computer program code for causing the network entity to receive a multimedia message retrieve request for a particular multimedia message from a multimedia messaging user agent;
computer program code for causing the network entity to obtain streaming adaptation information of the user agent that requested the multimedia message, responsive to receiving the retrieve request;
computer program code for causing the network entity to determine if the multimedia message addressed to a user agent comprises a streamable component that can be streamed to the user agent; and
computer program code for causing the network entity to generate, according to the streaming adaptation information, session description data to establish a streaming session for delivering the streamable component of the multimedia message, responsive to determining that the multimedia message comprises a streamable component;
computer program code for causing the network entity to replace the streamable component with a descriptor pointing to the location of the session description data for the streamable component, responsive to determining that the multimedia message comprises a streamable component;
computer program code for causing the network entity to send the multimedia message with the descriptor replacing the streamable component to the user agent, responsive to receiving the retrieve request; and
computer program code for causing the network entity to start to stream the streamable component in accordance with the session description data to the user agent.

41. A computer program product for controlling multimedia messaging user agent for receiving multimedia messages from a multimedia messaging network in a mobile multimedia messaging service wherein multimedia message notifications for notifying the presence of multimedia messages are sent to user agents, comprising:
computer program code for causing the user agent to send to the network a multimedia message retrieve request and streaming adaptation information concerning the user agent after the network has sent a notification for the multimedia message;
computer program code for causing the user agent to receive a multimedia message transmission responsive to the multimedia message retrieve request;
computer program code for causing the user agent to obtain from the received multimedia message transmission a descriptor pointing to a location in the network;
computer program code for causing the user agent to obtain session description data generated in accordance with the streaming adaptation information, from the location indicated by the descriptor; and
computer program code for causing the user agent to establish a streaming session in accordance with the session description data to retrieve a streamable media component.

## Patentansprüche

1. Multimedianachrichten-Netzeinheit (224) zum Senden von Multimedianachrichten an Multimedianachrichten-Benutzeragenten (110B) in einem mobilen Multimedianachrichten-Dienst, umfassend:
einen Port (650) zum Empfangen einer Multimedianachrichten-Abrufanforderung (312) für eine bestimmte Multimedianachricht von einem Multimedia-Benutzeragenten;
Mittel (610, 650, 160) zum Erhalten von Streaming-Anpassungsinformationen des Benutzeragenten (110B), der die Multimedianachricht angefordert hat, in Reaktion auf die Abrufanforderung (312);
Mittel (610), ansprechend auf die Abrufanforderung, zum Bestimmen, ob die an einen Multimedia-Benutzeragenten (110B) gerichtete Multimedianachricht eine als Stream darstellbare Komponente enthält, die an den Benutzeragenten (110B) als Stream übermittelt werden kann, und zum Erzeugen von Sitzungsbeschreibungsdaten (316) gemäß den Streaming-Anpassungsinformationen, um eine Streaming-Sitzung zum Übermitteln der als Stream darstellbaren Komponente der Multimedianachricht aufzubauen, in Reaktion auf die Bestimmung, dass die Multimedianachricht eine als Stream darstellbare Komponente umfasst;
Mittel (610) zum Ersetzen der durch einen Stream darstellbaren Komponente durch einen Deskriptor, der auf den Ort der Sitzungsbeschreibungsdaten für die durch einen Stream darstellbare Komponente weist, in Reaktion auf die Bestimmung, dass die Multimedianachricht eine als Stream darstellbare Komponente umfasst;
Mittel (610, 660) zum Senden der Multimedianachricht mit dem Deskriptor, der die durch einen Stream darstellbare Komponente ersetzt, an den Benutzeragenten (110B), in Reaktion auf die Bestimmung, dass die Multimedianachricht eine als Stream darstellbare Komponente umfasst;
Mittel (610, 660) zum Beginnen des Übermittelns als Stream der als Stream darstellbaren Komponente gemäß den Sitzungsbeschreibungsdaten an den Benutzeragenten (110B).

2. Netzeinheit nach Anspruch 1, wobei der Deskriptor auf einen Ort (150) weist, von dem die Sitzungsbeschreibungsdaten für die als Stream darstellbare Komponente erhalten werden können.

3. Netzeinheit nach Anspruch 2, wobei der Deskriptor eine zu verwendende Zugangsart, eine Adresse der Einheit, welche die als Stream darstellbare Komponente speichert, und die Kennung der als Stream darstellbaren Komponente angibt.

4. Netzeinheit nach einem der vorhergehenden Ansprüche, wobei die Mittel (610) zum Bestimmen, ob die an einen Multimedia-Benutzeragenten (110B) gerichtete Multimedianachricht eine als Stream darstellbare Komponente umfasst, die an den Benutzeragenten als Stream übermittelt werden kann, dazu eingerichtet ist, die Fähigkeiten der Netzeinheit zu berücksichtigen.

5. Netzeinheit nach einem der vorhergehenden Ansprüche, wobei das Mittel zum Beginnen des Streamings der als Stream darstellbaren Komponente dazu eingerichtet ist, das Streaming in Reaktion darauf zu beginnen, dass der Benutzeragent eine Streamingsitzung mit der Netzeinheit aufbaut.

6. Netzeinheit gemäß einem der vorhergehenden Ansprüche, wobei der Port (650) weiter dazu eingerichtet ist, einen Zeiger auf die Streaming-Anpassungsinformationen von dem Benutzeragenten zu empfangen.

7. Netzeinheit nach einem der vorhergehenden Ansprüche, wobei die Sitzungsbeschreibungsdaten in einer Sitzungs-Beschreibungs-Protokoll(Session Description Protocol, SDP)-Datei vorliegen.

8. Netzeinheit nach einem der vorhergehenden Ansprüche, weiter umfassend Mittel zum Einrichten der Multimedianachricht so, dass der Deskriptor in einem frühen Teil der Multimedianachricht übermittelt wird, um dem Beginn der Streamingsitzung voranzugehen.

9. Netzeinheit nach einem der vorhergehenden Ansprüche, weiter umfassend einen Ausgang (660) zum Ausgeben einer Benachrichtigung (310) an den Benutzeragenten, um über die Multimedianachricht zu informieren; und Mittel (650, 610) zum Erkennen einer Übermittlung der Benachrichtigungsnachricht (310) durch Empfangen einer kombinierten Benachrichtigungsbestätigung (311) und Abrufanforderung (312).

10. Netzeinheit nach einem der vorhergehenden Ansprüche, wobei die Streaming-Anpassungsinformationen Informationen über die Fähigkeiten des Benutzeragenten umfassen, Daten als Stream zu übermitteln oder über Benutzereinstellungen in Bezug auf Streaming.

11. Netzeinheit nach einem der vorhergehenden Ansprüche, wobei das Mittel zum Erhalten der Streaming-Anpassungsinformationen dazu eingerichtet ist, die Streaming-Anpassungsinformationen auf der Grundlage von Informationen zu erhalten, die in der Abrufanforderung (312) enthalten sind, oder von Informationen, die nachfolgend von dem Benutzeragenten (110B) empfangen werden.

12. Netzeinheit nach einem der vorhergehenden Ansprüche, umfassend einen Multimediainhalts-Server und eine Multimedianachrichten-Weiterleitungseinheit mit einer physikalischen Beziehung gewählt aus: eine einheitliche Einheit, getrennte Einheiten und getrennte Einheiten an verschiedenen geographischen Orten.

13. Netzeinheit nach einem der Ansprüche 1 bis 11, umfassend eine Multimedianachrichten-Weiterleitungseinheit, wobei die Mittel zum Ersetzen der als Stream darstellbaren Komponente durch einen Deskriptor außerhalb der Multimedianachrichten-Weiterleitungseinheit vorliegen.

14. Netzeinheit nach einem der Ansprüche 1 bis 11, umfassend eine Multimedianachrichten-Weiterleitungseinheit, wobei die Mittel zum Ersetzen der als Stream darstellbaren Komponente durch einen Deskriptor in der Multimedianachrichten-Weiterleitungseinheit vorliegen.

15. Multimedianachrichten-Benutzeragent (MS) zum Empfangen von Multimedianachrichten von einem Multimedianachrichten-Netz (210, 212, 220, 222) in einem mobilen Multimedianachrichten-Dienst, wobei Multimedianachrichten-Benachrichtigungen (311) zum Benachrichtigen über das Vorliegen von Multimedianachrichten an Benutzeragenten gesendet werden, umfassend:
einen Sender (RF) zum Senden einer Multimedianachrichten-Abrufanforderung (312) und von Streaming-Anpassungsinformationen bezüglich des Benutzeragenten (MS) an das Netz, nachdem das Netz eine Benachrichtigung (311) für die Multimedianachricht gesendet hat;
einen Empfänger (RF) zum Empfangen einer Multimedianachrichten-Übertragung in Reaktion auf die Multimedianachrichten-Abrufanforderung (312);
Mittel (µP) zum Erhalten eines Deskriptors, der auf einen Ort (150) in dem Netz weist, aus der empfangenen Multimedianachrichten-Übertragung;
Mittel (µP, RF) zum Erhalten der Sitzungsbeschreibungsdaten, die gemäß der Streaming-Anpassunginformationen erzeugt werden, von dem durch den Deskriptor angegebenen Ort (150); und
Mittel (µP, RF) zum Aufbauen einer Streaming-Sitzung gemäß der Sitzungsbeschreibungsdaten, um eine als Stream darstellbare Medienkomponente abzurufen.

16. Benutzeragent nach Anspruch 15, wobei der Deskriptor auf einen Ort weist, von dem die Sitzungsbeschreibungsdaten für die als Stream darstellbare Komponente erhalten werden können.

17. Benutzeragent nach Anspruch 15 oder 16, wobei der Sender dazu eingerichtet ist, eine kombinierte Benachrichtigungsbestätigung (311) und Abrufanforderung (312) in Reaktion auf das Empfangen der Benachrichtigung (310) zu senden.

18. Benutzeragent nach einem der Ansprüche 15 bis 17, wobei die Streaming-Anpassungsinformationen mindestens eines der folgenden umfassen:
Fähigkeitsinformationen, Benutzereinstellungen bezüglich des Benutzeragenten, einen Zeiger auf einen Ort (160), an dem Fähigkeitsinformationen gespeichert sind, und
einen Zeiger auf einen Ort (160), an dem Benutzereinstellungen bezüglich des Benutzeragenten gespeichert sind.

19. Benutzeragent nach einem der Ansprüche 15 bis 18, wobei das Mittel zum Erhalten der Sitzungsbeschreibungsdaten dazu eingerichtet ist, die Sitzungsbeschreibungsdaten aus einer Sitzungsbeschreibungsprotokoll-Datei zu erhalten.

20. Benutzeragent nach einem der Ansprüche 15 bis 19, wobei der Deskriptor Zugangsinformationen angibt, die eine zu verwendende Zugangsart, eine Adresse der Einheit, welche die als Stream darstellbare Komponente speichert, und die Kennung der als Stream darstellbaren Komponente enthalten; und wobei das Mittel zum Erhalten der Sitzungsbeschreibungsdaten dazu eingerichtet ist, gemäß den Zugangsinformationen vorzugehen.

21. Benutzeragent nach einem der Ansprüche 15 bis 20, weiter umfassend einen Ausgangsport, der dazu eingerichtet ist, eine Multimedianachrichtenkomponente an eine externe Vorrichtung für eine Wiedergabe durch diese weiterzuleiten.

22. Benutzeragent nach Anspruch 21, wobei der Ausgangsport ein drahtloser Port ist.

23. Benutzeragent nach einem der Ansprüche 21 oder 22, wobei der drahtlose Port ein Funkfrequenzport mit niedriger Leistung (Low Power Radio Frequency) ist.

24. Benutzeragent nach einem der Ansprüche 21 bis 23, weiter umfassend Mittel zum Anpassen der Streaming-Anpassungsinformationen so, dass sie den Fähigkeiten der externen Vorrichtung entsprechen.

25. Mobiles Multimedianachrichten-Dienstsystem (100), umfassend einen Multimedianachrichten-Benutzeragenten (110B) und ein Multimedianachrichtennetz (210, 212, 220, 222) zum Verarbeiten von Multimedianachrichten, die an den Multimedianachrichten-Benutzeragent (110B) gerichtet sind, wobei das Netz umfasst:
Mittel (650) zum Empfangen einer Multimedianachrichten-Abrufanforderung von dem Benutzeragenten;
Mittel (610, 160, 650) zum Erhalten von Streaming-Anpassungsinformationen des Benutzeragenten (110B) in Reaktion auf die Abrufanforderung (312);
Mittel (610), ansprechend auf die Abrufanforderung, zum Bestimmen, ob die an den Benutzeragenten (110B) gerichtete Multimedianachricht eine als Stream darstellbare Komponente umfasst, die als Stream an den Benutzeragenten übermittelt werden kann, und zum Erzeugen von Sitzungsbeschreibungsdaten (316) gemäß der Streaming-Anpassungsinformationen, um eine Streamingsitzung aufzubauen, um die als Stream darstellbare Komponente der Multimedianachricht zuzustellen;
Mittel (610) zum Ersetzen der als Stream darstellbaren Komponente durch einen Deskriptor, der auf den Ort der Sitzungsbeschreibungsdaten für die als Stream darstellbare Komponente weist, in Reaktion auf die Bestimmung, dass die Multimedianachricht eine als Stream darstellbare Komponente umfasst;
Mittel (610) zum Senden der Multimedianachricht mit dem Deskriptor, der die als Stream darstellbare Komponente ersetzt, an den Benutzeragenten, in Reaktion auf die Bestimmung, dass die Multimedianachricht eine als Stream darstellbare Komponente umfasst; und
Mittel (610, 660) zum Beginnen der Übermittlung als Stream der als Stream darstellbaren Komponente gemäß der Sitzungsbeschreibungsdaten an den Benutzeragenten;
wobei der Benutzeragent (110B) umfasst:
einen Sender (RF) zum Senden der Multimedianachrichten-Abrufanforderung (312) zum Empfangen der Multimedianachricht und der Streaming-Anpassungsinformationen bezüglich des Benutzeragenten an das Netz;
einen Empfänger (RF) zum Empfangen einer Multimedianachricht in Reaktion auf die Multimedianachrichten-Abrufanforderung;
Mittel (µP) zum Erhalten des Deskriptors, der auf die Sitzungsbeschreibungsdaten weist, aus der empfangenen Multimedianachrichtenübertragung;
Mittel (µP, RF) zum Erhalten der Sitzungsbeschreibungsdaten, auf die der Deskriptor weist; und
Mittel (µP, RF) zum Einleiten einer Streaming-Sitzung gemäß der Sitzungsbeschreibungsdaten, um die als Stream darstellbare Komponente abzurufen.

26. System nach Anspruch 25, weiter umfassend einen Inhaltsserver zum Speichern und Senden von Multimedianachrichteninhalten, und einen Benachrichtigungsserver zum Benachrichtigen des Benutzeragenten über die Multimedianachricht, wobei der Inhaltsserver und der Benachrichtigungsserver eine physikalische Beziehung gewählt aus der folgenden Gruppe aufweisen: eine einzelne Einheit, getrennte Einheiten, und getrennte Einheiten, die an verschiedenen geographischen Orten verteilt sind.

27. System nach Anspruch 25 oder 26, weiter umfassend:
einen ersten Medienserver und einen zweiten Medienserver, wobei der erste Medienserver nicht in der Lage ist, die als Stream darstellbare Medienkomponente an den Benutzeragenten als Stream zu übermitteln, und der zweite Medienserver in der Lage ist, die als Stream darstellbare Medienkomponente an den Benutzeragenten als Stream zu übermitteln; und
Mittel zum Übertragen der Multimedianachricht an den zweiten Medienserver, um ein Streaming der als Stream darstellbaren Komponente an den Benutzeragenten zu ermöglichen.

28. System nach einem der Ansprüche 25 bis 27, weiter umfassend eine Multimedianachrichten-Weiterleitungseinheit, die dazu eingerichtet ist, die als Stream darstellbare Komponente durch den Deskriptor zu ersetzen.

29. Verfahren zum Senden von Multimedianachrichten in einem mobilen Multimedianachrichten-Dienst an einen Multimedianachrichten-Benutzeragenten, umfassend:
Empfangen einer Multimedianachricht-Abrufanforderung für eine bestimmte
Multimedianachricht von einem Multimedianachrichten-Benutzeragenten; und in Reaktion auf die Abrufanforderung:
Erhalten von Streaming-Anpassungsinformationen des Benutzeragenten, der die Multimedianachricht angefordert hat;
Bestimmen, ob die an einen Benutzeragenten gerichtete Multimedianachricht eine als Stream darstellbare Komponente umfasst, die an den Benutzeragenten als Stream übermittelt werden kann;
in Reaktion auf die Bestimmung, dass die Multimedianachricht eine als Stream darstellbare Komponente umfasst, Erzeugen von Sitzungsbeschreibungsdaten gemäß der Streaming-Anpassungsinformationen, um eine Streamingsitzung zum Übermitteln der als Stream darstellbaren Komponente der Multimedianachricht aufzubauen;
in Reaktion auf die Bestimmung, dass die Multimedianachricht eine als Stream darstellbare Komponente umfasst, Ersetzen der als Stream darstellbaren Komponente durch einen Deskriptor, der auf den Ort der Sitzungsbeschreibungsdaten für die als Stream darstellbare Komponente weist, und Senden der Multimedianachricht mit dem Deskriptor, der die als Stream darstellbare Komponente ersetzt, an den Benutzeragenten; und
Beginnen des Übermittelns als Stream der als Stream darstellbaren Komponente gemäß den Sitzungsbeschreibungsdaten an den Benutzeragenten.

30. Verfahren nach Anspruch 29, wobei die Streaming-Anpassungsinformationen Informationen über die Fähigkeiten des Benutzeragenten, Daten als Stream darzustellen, und/oder über Benutzereinstellungen in Bezug auf Streaming umfassen.

31. Verfahren nach einem der Ansprüche 29 bis 30, wobei das Erhalten der Streaming-Anpassungsinformationen auf Informationen basiert, die in der Abrufanforderung enthalten sind.

32. Verfahren nach einem der Ansprüche 29 bis 31, wobei das Erhalten der Streaming-Anpassungsinformationen auf Informationen basiert, die in einer Übermittlung enthalten sind, welche nachfolgend auf die Abrufanforderung empfangen wurde.

33. Verfahren nach einem der Ansprüche 29 bis 32, wobei der Schritt des Ersetzens der als Stream darstellbaren Komponente durch einen Deskriptor in einer Multimedianachrichten-Weiterleitungseinheit stattfindet.

34. Verfahren nach einem der Ansprüche 29 bis 32, wobei der Schritt des Erzeugens der Sitzungsbeschreibungsdaten in einer anderen Einheit als der Multimedianachrichten-Weiterleitungseinheit stattfindet.

35. Verfahren zum Empfangen von Multimedianachrichten durch einen Multimedianachrichten-Benutzeragenten von einem Multimedianachrichten-Netz in einem mobilen Multimedianachrichtendienst, wobei Benutzeragenten Multimedianachrichten-Benachrichtigungen empfangen, die über das Vorliegen von Multimedianachrichten benachrichtigen, und Abrufanforderungen senden, um nachfolgend Multimedianachrichten zu empfangen, umfassend:
Senden einer Multimedianachrichten Abrufanforderung zum Empfangen einer Multimedianachricht und von Streaming-Anpassungsinformationen bezüglich des Benutzeragenten an das Netz, nachdem das Netz eine Benachrichtigung über die Multimedianachricht gesendet hat;
Empfangen einer Multimedianachrichten-Übertragung von dem Netz in Reaktion auf die Multimedianachrichten-Abrufanforderung;
Erhalten eines Deskriptors, der auf einen Ort in dem Netz weist, aus der empfangenen Multimedianachrichten-Übertragung;
Erhalten von Sitzungsbeschreibungsdaten von dem durch den Deskriptor angegebenen Ort, um eine Streamingsitzung aufzubauen, um eine als Stream darstellbare Komponente abzurufen, die gemäß der Streaming-Anpassungsinformationen erzeugt wurden; und
Aufbauen einer Streaming-Sitzung gemäß den Sitzungsbeschreibungsdaten, um eine als Stream darstellbare Medienkomponente abzurufen.

36. Verfahren nach Anspruch 35, wobei die Streaming-Anpassungsinformationen Benutzeragenten-Fähigkeitsinformationen und/oder Streaming-Einstellungsinformationen bereitstellen.

37. Verfahren nach einem der Ansprüche 29 bis 36, wobei die Sitzungsbeschreibungsdaten Informationen umfassen, die notwendig sind, um eine Streamingsitzung für das Streaming der als Stream darstellbaren Komponente aufzubauen.

38. Verfahren nach einem der Ansprüche 29 bis 37, wobei die Multimedianachricht über einen drahtlosen Kommunikationskanal an den Benutzeragenten übertragen wird.

39. Verfahren nach einem der Ansprüche 35 bis 38, wobei die Streaming-Anpassungsinformationen mindestens eines der folgenden umfassen:
Fähigkeitsinformationen, Benutzereinstellungen bezüglich des Benutzeragenten, einen Zeiger auf einen Ort, an dem Fähigkeitsinformationen gespeichert sind, und einen Zeiger auf einen Ort, an dem Benutzereinstellungen bezüglich des Benutzeragenten gespeichert sind.

40. Computerprogrammprodukt zum Steuern einer Multimedianachrichten-Netzeinheit zum Senden von Multimedianachrichten an Multimedianachrichten-Benutzeragenten in einem mobilen Multimedianachrichten-Dienst, umfassend:
Computerprogrammcode, um die Netzeinheit zu veranlassen, eine Multimedianachrichten-Abrufanforderung für eine bestimmte Multimedianachricht von einem Multimedianachrichten-Benutzeragenten zu empfangen;
Computerprogrammcode, um die Netzeinheit zu veranlassen, Streaming-Anpassungsinformationen des Benutzeragenten zu erhalten, der die Multimedianachricht angefordert hat, in Reaktion auf das Empfangen der Abrufanforderung;
Computerprogrammcode, um die Netzeinheit zu veranlassen, zu bestimmen, ob die an einen Benutzeragenten gerichtete Multimedianachricht eine als Stream darstellbare Komponente umfasst, die an den Benutzeragenten als Stream übermittelt werden kann; und
Computerprogrammcode, um die Netzeinheit zu veranlassen, gemäß den Streaming-Anpassungsinformationen Sitzungsbeschreibungsdaten zu erzeugen,
um eine Streaming-Sitzung aufzubauen, um die als Stream darstellbare Komponente der Multimedianachricht zu übermitteln, in Reaktion auf die Bestimmung, dass die Multimedianachricht eine als Stream darstellbare Komponente umfasst;
Computerprogrammcode, um die Netzeinheit zu veranlassen, die als Stream darstellbare Komponente durch einen Deskriptor zu ersetzen, der auf den Ort der Sitzungsbeschreibungsdaten für die als Stream darstellbare Komponente zeigt, in Reaktion auf die Bestimmung, dass die Multimedianachricht eine als Stream darstellbare Komponente umfasst;
Computerprogrammcode, um die Netzeinheit zu veranlassen, die Multimedianachricht mit dem Deskriptor, der die als Stream darstellbare Komponente ersetzt, an den Benutzeragenten zu senden, in Reaktion auf das Empfangen der Abrufanforderung; und
Computerprogrammcode, um die Netzeinheit zu veranlassen, das Übermitteln als Stream der als Stream darstellbaren Komponente an den Benutzeragenten zu beginnen, in Übereinstimmung mit den Sitzungsbeschreibungsdaten.

41. Computerprogrammprodukt zum Steuern eines Multimedianachrichten-Benutzeragenten zum Empfangen von Multimedianachrichten von einem Multimedianachrichten-Netz in einem mobilen Multimedianachrichten-Dienst, wobei Multimedianachrichten-Benachrichtigungen zum Benachrichtigen über das Vorliegen von Multimedianachrichten an Benutzeragenten gesendet werden, umfassend:
Computerprogrammcode, um den Benutzeragenten zu veranlassen, an das Netz eine Multimedianachrichten-Abrufanforderung und Streaming-Anpassungsinformationen bezüglich des Benutzeragenten zu senden, nachdem das Netz eine Benachrichtigung über die Multimedianachricht gesendet hat;
Computerprogrammcode, um den Benutzeragenten zu veranlassen, eine Multimedianachrichten-Übermittlung zu empfangen, in Reaktion auf die Multimedianachrichten-Abrufanforderung;
Computerprogrammcode, um den Benutzeragenten zu veranlassen, aus der empfangenen Multimedianachrichten-Übermittlung einen Deskriptor zu erhalten, der auf einen Ort in dem Netz weist;
Computerprogrammcode, um den Benutzeragenten zu veranlassen, Sitzungsbeschreibungsdaten, die gemäß der Streaming-Anpassungsinformationen erzeugt wurden, von dem Ort zu erhalten, der von dem Deskriptor angegeben wird; und
Computerprogrammcode, um den Benutzeragenten zu veranlassen, eine Streamingsitzung gemäß den Sitzungsbeschreibungsdaten aufzubauen, um eine als Stream darstellbare Medienkomponente abzurufen.

## Revendications

1. Entité de réseau de messagerie multimédia (224) pour envoyer des messages multimédias à des agents utilisateurs de messagerie multimédia (110B) dans un service de messagerie multimédia mobile, comprenant :
un port (650) pour recevoir une demande d'extraction de message multimédia (312) pour un message multimédia particulier à partir d'un agent utilisateur multimédia ;
des moyens (610, 650, 160) pour obtenir des informations d'adaptation de transmission en continu de l'agent utilisateur (110B) qui a demandé le message multimédia, en réponse à la demande d'extraction (312) ;
des moyens (610) répondant à la demande d'extraction pour déterminer si le message multimédia adressé à un agent utilisateur multimédia (110B) comprend un composant pouvant être transmis en continu qui peut être transmis en continu à l'agent utilisateur (110B) et pour générer, selon les informations d'adaptation de transmission en continu, des données de description de session (316) pour établir une session de transmission en continu pour livrer le composant pouvant être transmis en continu du message multimédia, en réponse à la détermination que le message multimédia comprend un composant pouvant être transmis en continu ;
des moyens (610) pour remplacer le composant pouvant être transmis en continu par un descripteur indiquant la localisation des données de description de session pour le composant pouvant être transmis en continu, en réponse à la détermination que le message multimédia comprend un composant pouvant être transmis en continu ;
des moyens (610, 660) pour envoyer le message multimédia avec le descripteur remplaçant le composant pouvant être transmis en continu à l'agent utilisateur (110B), en réponse à la détermination que le message multimédia comprend un composant pouvant être transmis en continu ;
des moyens (610, 660) pour commencer la transmission en continu du composant pouvant être transmis en continu conformément aux données de description de session à l'agent utilisateur (110B).

2. Entité de réseau selon la revendication 1, dans laquelle le descripteur indique une localisation (150) à partir de laquelle les données de description de session pour le composant pouvant être transmis en continu peuvent être obtenues.

3. Entité de réseau selon la revendication 2, dans laquelle le descripteur spécifie un type d'accès à utiliser, une adresse de l'entité stockant le composant pouvant être transmis en continu et l'identification du composant pouvant être transmis en continu.

4. Entité de réseau selon une quelconque des revendications précédentes, dans laquelle les moyens (610) pour déterminer si le message multimédia adressé à un agent utilisateur multimédia (110B) comprend un composant pouvant être transmis en continu qui peut être transmis en continu à l'agent utilisateur sont configurés pour prendre en compte les capacités de l'entité de réseau.

5. Entité de réseau selon une quelconque des revendications précédentes, dans laquelle les moyens pour commencer la transmission en continu du composant pouvant être transmis en continu sont configurés pour commencer la transmission en continu en réponse à l'agent utilisateur établissant une session de transmission en continu avec l'entité de réseau.

6. Entité de réseau selon une quelconque des revendications précédentes, dans laquelle le port (650) est en outre configuré pour recevoir un pointeur aux informations d'adaptation de transmission en continu à partir de l'agent utilisateur.

7. Entité de réseau selon une quelconque des revendications précédentes, dans laquelle les données de description de session sont dans un fichier de protocole de description de session (« Session Description Protocol » ou SDP).

8. Entité de réseau selon une quelconque des revendications précédentes, comprenant en outre des moyens pour arranger le message multimédia de sorte que le descripteur soit livré dans une partie préalable du message multimédia afin d'avancer le commencement de la session de transmission en continu.

9. Entité de réseau selon une quelconque des revendications précédentes, comprenant en outre une sortie (660) pour envoyer une notification (310) à l'agent utilisateur pour informer du message multimédia ; et des moyens (650, 610) pour détecter la livraison du message de notification (310) en recevant une combinaison d'accusé de réception de notification (311) et de demande d'extraction (312).

10. Entité de réseau selon une quelconque des revendications précédentes, dans laquelle les informations d'adaptation de transmission en continu comprennent des informations concernant les capacités de l'agent utilisateur pour transmettre en continu des données et/ou des préférences d'utilisateur concernant la transmission en continu.

11. Entité de réseau selon une quelconque des revendications précédentes, dans laquelle les moyens pour obtenir les informations d'adaptation de transmission en continu sont configurés pour obtenir les informations d'adaptation de transmission en continu sur la base d'informations contenues dans la demande d'extraction (312) ou d'informations reçues par la suite à partir de l'agent utilisateur (110B).

12. Entité de réseau selon une quelconque des revendications précédentes, comprenant un serveur de contenu multimédia et un relais de messagerie multimédia avec une relation physique sélectionnée parmi le groupe constitué des éléments suivants : une unité intégrée, des unités séparées et des unités séparées à des localisations géographiques différentes.

13. Entité de réseau selon une quelconque des revendications 1 à 11, comprenant un relais de messagerie multimédia, dans laquelle les moyens pour remplacer le composant pouvant être transmis en continu par un descripteur se trouvent à l'extérieur du relais de messagerie multimédia.

14. Entité de réseau selon une quelconque des revendications 1 à 11, comprenant un relais de messagerie multimédia, dans laquelle les moyens pour remplacer le composant pouvant être transmis en continu par un descripteur se trouvent dans le relais de messagerie multimédia.

15. Agent utilisateur de messagerie multimédia (MS) pour recevoir des messages multimédias à partir d'un réseau de messagerie multimédia (210, 212, 220, 222) dans un service de messagerie multimédia mobile dans lequel des notifications de message multimédia (311) pour notifier de la présence de messages multimédias sont envoyées à des agents utilisateurs, comprenant :
un transmetteur (RF) pour envoyer au réseau une demande d'extraction de message multimédia (312) et des informations d'adaptation de transmission en continu concernant l'agent utilisateur (MS) après que le réseau a envoyé une notification (311) pour le message multimédia ;
un récepteur (RF) pour recevoir une transmission de message multimédia en réponse à la demande d'extraction de message multimédia (312) ;
des moyens (µP) pour obtenir, à partir de la transmission de message multimédia reçue, un descripteur indiquant une localisation (150) dans le réseau ;
des moyens (µP, RF) pour obtenir les données de description de session générées conformément aux informations d'adaptation de transmission en continu, à partir de la localisation (150) indiquée par le descripteur ; et
des moyens (µP, RF) pour établir une session de transmission en continu conformément aux données de description de session pour extraire un composant de média pouvant être transmis en continu.

16. Agent utilisateur selon la revendication 15, dans lequel le descripteur indique une localisation à partir de laquelle les données de description de session pour le composant pouvant être transmis en continu peuvent être obtenues.

17. Agent utilisateur selon la revendication 15 ou 16, dans lequel le transmetteur est configuré pour transmettre une combinaison d'accusé de réception de notification (311) et de demande d'extraction (312) en réponse à la réception de la notification (310).

18. Agent utilisateur selon une quelconque des revendications 15 à 17, dans lequel les informations d'adaptation de transmission en continu comprennent au moins un élément parmi des informations de capacité, des préférences d'utilisateur concernant l'agent utilisateur, un pointeur à une localisation (160) où des informations de capacité sont stockées et un pointeur à une localisation (160) où des préférences d'utilisateur concernant l'agent utilisateur sont stockées.

19. Agent utilisateur selon une quelconque des revendications 15 à 18, dans lequel les moyens pour obtenir les données de description de session sont configurés pour obtenir les données de description de session à partir d'un fichier de protocole de description de session (« Session Description Protocol » ou SDP).

20. Agent utilisateur selon une quelconque des revendications 15 à 19, dans lequel le descripteur spécifie des informations d'accès contenant un type d'accès à utiliser, une adresse de l'entité stockant le composant pouvant être transmis en continu et l'identification du composant pouvant être transmis en continu ; et dans lequel les moyens pour obtenir les données de description de session sont configurés pour fonctionner selon les informations d'accès.

21. Agent utilisateur selon une quelconque des revendications 15 à 20, comprenant en outre un port de sortie configuré pour réacheminer un composant de message multimédia jusqu'à un dispositif externe pour une présentation par celui-ci.

22. Agent utilisateur selon la revendication 21, dans lequel le port de sortie est un port sans fil.

23. Agent utilisateur selon une quelconque des revendications 21 ou 22, dans lequel le port sans fil est un port à fréquence radio à faible puissance.

24. Agent utilisateur selon une quelconque des revendications 21 à 23, comprenant en outre des moyens pour adapter les informations d'adaptation de transmission en continu pour correspondre aux capacités du dispositif externe.

25. Système de service de messagerie multimédia mobile (100) comprenant un agent utilisateur de messagerie multimédia (110B) et un réseau de messagerie multimédia (210, 212, 220, 222) pour traiter des messages multimédias adressés à l'agent utilisateur de messagerie multimédia (110B), le réseau comprenant :
des moyens (650) pour recevoir une demande d'extraction de message multimédia à partir de l'agent utilisateur ;
des moyens (610, 160, 650) pour obtenir des informations d'adaptation de transmission en continu de l'agent utilisateur (110B) en réponse à la demande d'extraction (312) ;
des moyens (610) répondant à la demande d'extraction pour déterminer si le message multimédia adressé à l'agent utilisateur (110B) comprend un composant pouvant être transmis en continu qui peut être transmis en continu à l'agent utilisateur et pour générer, selon les informations d'adaptation de transmission en continu, des données de description de session (316) pour établir une session de transmission en continu pour distribuer le composant pouvant être transmis en continu du message multimédia ;
des moyens (610) pour remplacer le composant pouvant être transmis en continu par un descripteur indiquant la localisation des données de description de session pour le composant pouvant être transmis en continu, en réponse à la détermination que le message multimédia comprend un composant pouvant être transmis en continu ;
des moyens (610) pour envoyer le message multimédia avec le descripteur remplaçant le composant pouvant être transmis en continu à l'agent utilisateur, en réponse à la détermination que le message multimédia comprend un composant pouvant être transmis en continu ; et
des moyens (610, 660) pour commencer la transmission en continu du composant pouvant être transmis en continu conformément aux données de description de session à l'agent utilisateur ;
l'agent utilisateur (110B) comprenant :
un transmetteur (RF) pour envoyer au réseau la demande d'extraction de message multimédia (312) pour recevoir le message multimédia et les informations d'adaptation de transmission en continu concernant l'agent utilisateur ;
un récepteur (RF) pour recevoir un message multimédia en réponse à la demande d'extraction de message multimédia ;
des moyens (µP) pour obtenir, à partir de la transmission de message multimédia reçue, le descripteur indiquant les données de description de session ;
des moyens (µP, RF) pour obtenir les données de description de session indiquées par le descripteur ; et
des moyens (µP, RF) pour lancer une session de transmission en continu conformément aux données de description de session pour extraire le composant pouvant être transmis en continu.

26. Système selon la revendication 25, comprenant en outre un serveur de contenu pour stocker et transmettre un contenu de message multimédia et un serveur de notification pour notifier l'agent utilisateur du message multimédia, dans lequel le serveur de contenu et le serveur de notification possèdent une relation physique sélectionnée parmi le groupe constitué des éléments suivants : une unité unique, des unités séparées, et des unités séparées distribuées à des localisations géographiques différentes.

27. Système selon la revendication 25 ou 26, comprenant en outre :
un premier serveur média et un second serveur média, le premier serveur média n'étant pas capable de transmettre en continu le composant média pouvant être transmis en continu à l'agent utilisateur et le second serveur média étant capable de transmettre en continu le composant média pouvant être transmis en continu à l'agent utilisateur ; et
des moyens pour transférer le message multimédia au second serveur média pour permettre de transmettre en continu le composant pouvant être transmis en continu à l'agent utilisateur.

28. Système selon une quelconque des revendications 25 à 27, comprenant en outre un relais de messagerie multimédia configuré pour remplacer le composant pouvant être transmis en continu par le descripteur.

29. Procédé pour envoyer des messages multimédias dans un service de messagerie multimédia mobile à un agent utilisateur de messagerie multimédia, comprenant les étapes consistant à :
recevoir une demande d'extraction de message multimédia pour un message multimédia particulier à partir d'un agent utilisateur de messagerie multimédia ; et
en réponse à la demande d'extraction :
obtenir des informations d'adaptation de transmission en continu de l'agent utilisateur qui a demandé le message multimédia ;
déterminer si le message multimédia adressé à un agent utilisateur comprend un composant pouvant être transmis en continu qui peut être transmis en continu à l'agent utilisateur ;
en réponse à la détermination que le message multimédia comprend un composant pouvant être transmis en continu, générer, selon les informations d'adaptation de transmission en continu, des données de description de session pour établir une session de transmission en continu pour distribuer le composant pouvant être transmis en continu du message multimédia ;
en réponse à la détermination que le message multimédia comprend un composant pouvant être transmis en continu, remplacer le composant pouvant être transmis en continu par un descripteur indiquant la localisation des données de description de session pour le composant pouvant être transmis en continu et envoyer le message multimédia avec le descripteur remplaçant le composant pouvant être transmis en continu à l'agent utilisateur ; et
commencer la transmission en continu du composant pouvant être transmis en continu conformément aux données de description de session à l'agent utilisateur.

30. Procédé selon la revendication 29, dans lequel les informations d'adaptation de transmission en continu comprennent des informations concernant au moins un élément parmi des capacités de l'agent utilisateur à transmettre des données en continu et des préférences d'utilisateur concernant la transmission en continu.

31. Procédé selon une quelconque des revendications 29 à 30, dans lequel l'étape consistant à obtenir les informations d'adaptation de transmission en continu est fondée sur des informations contenues dans la demande d'extraction.

32. Procédé selon une quelconque des revendications 29 à 31, dans lequel l'étape consistant à obtenir les informations d'adaptation de transmission en continu est fondée sur des informations contenues dans une communication reçue à la suite de la demande d'extraction.

33. Procédé selon une quelconque des revendications 29 à 32, dans lequel l'étape consistant à remplacer le composant pouvant être transmis en continu par un descripteur est réalisée dans un relais de messagerie multimédia.

34. Procédé selon une quelconque des revendications 29 à 32, dans lequel l'étape consistant à générer les données de description de session est réalisée dans une entité autre que le relais de messagerie multimédia.

35. Procédé pour recevoir des messages multimédias par un agent utilisateur de messagerie multimédia à partir d'un réseau de messagerie multimédia dans un service de messagerie multimédia mobile dans lequel des agents utilisateurs reçoivent des notifications de message multimédia notifiant de la présence de messages multimédias et envoient des demandes d'extraction pour recevoir par la suite des messages multimédias, comprenant les étapes consistant à :
envoyer au réseau une demande d'extraction de message multimédia pour recevoir un message multimédia et des informations d'adaptation de transmission en continu concernant l'agent utilisateur après que le réseau a envoyé une notification pour le message multimédia ;
recevoir, à partir du réseau, une transmission de message multimédia en réponse à la demande d'extraction de message multimédia ;
obtenir, à partir de la transmission de message multimédia reçue, un descripteur indiquant une localisation dans le réseau ;
obtenir des données de description de session pour établir une session de transmission en continu pour extraire un composant pouvant être transmis en continu générées conformément aux informations d'adaptation de transmission en continu, à partir de la localisation indiquée par le descripteur ; et
établir une session de transmission en continu conformément aux données de description de session pour extraire un composant de média pouvant être transmis en continu.

36. Procédé selon la revendication 35, dans lequel les informations d'adaptation de transmission en continu fournissent au moins un élément parmi des informations de capacité d'agent utilisateur et des informations de préférence de transmission en continu.

37. Procédé selon une quelconque des revendications 29 à 36, dans lequel les données de description de session comprennent des informations nécessaires pour établir une session de transmission en continu pour la transmission en continu du composant pouvant être transmis en continu.

38. Procédé selon une quelconque des revendications 29 à 37, dans lequel le message multimédia est transféré, par l'intermédiaire d'un canal de communication sans fil, à l'agent utilisateur.

39. Procédé selon une quelconque des revendications 35 à 38, dans lequel les informations d'adaptation de transmission en continu comprennent au moins un élément parmi des informations de capacité, des préférences d'utilisateur concernant l'agent utilisateur, un pointeur à une localisation où des informations de capacité sont stockées et un pointeur à une localisation où des préférences d'utilisateur concernant l'agent utilisateur sont stockées.

40. Produit-programme informatique pour commander un réseau d'entité de messagerie multimédia pour envoyer des messages multimédias à des agents utilisateurs de messagerie multimédia dans un service de messagerie multimédia mobile, comprenant :
un code de programme informatique pour faire en sorte que l'entité de réseau reçoive une demande d'extraction de message multimédia pour un message multimédia particulier à partir d'un agent utilisateur de messagerie multimédia ;
un code de programme informatique pour faire en sorte que l'entité de réseau obtienne des informations d'adaptation de transmission en continu de l'agent utilisateur qui a demandé le message multimédia, en réponse à la réception de la demande d'extraction ;
un code de programme informatique pour faire en sorte que l'entité de réseau détermine si le message multimédia adressé à un agent utilisateur comprend un composant pouvant être transmis en continu qui peut être transmis en continu à l'agent utilisateur ; et
un code de programme informatique pour faire en sorte que l'entité de réseau génère, selon les informations d'adaptation de transmission en continu, des données de description de session pour établir une session de transmission en continu pour distribuer le composant pouvant être transmis en continu du message multimédia, en réponse à la détermination que le message multimédia comprend un composant pouvant être transmis en continu ;
un code de programme informatique pour faire en sorte que l'entité de réseau remplace le composant pouvant être transmis en continu avec un descripteur indiquant la localisation des données de description de session pour le composant pouvant être transmis en continu, en réponse à la détermination que le message multimédia comprend un composant pouvant être transmis en continu ;
un code de programme informatique pour faire en sorte que l'entité de réseau envoie le message multimédia avec le descripteur remplaçant le composant pouvant être transmis en continu à l'agent utilisateur, en réponse à la réception de la demande d'extraction ; et
un code de programme informatique pour faire en sorte que l'entité de réseau commence la transmission en continu du composant pouvant être transmis en continu conformément aux données de description de session à l'agent utilisateur.

41. Produit-programme informatique pour commander un agent utilisateur de messagerie multimédia pour recevoir des messages multimédias à partir d'un réseau de messagerie multimédia dans un service de messagerie multimédia mobile dans lequel des notifications de message multimédia pour notifier de la présence de messages multimédias sont envoyées à des agents utilisateurs, comprenant :
un code de programme informatique pour faire en sorte que l'agent utilisateur envoie au réseau une demande d'extraction de message multimédia et des informations d'adaptation de transmission en continu concernant l'agent utilisateur après que le réseau a envoyé une notification pour le message multimédia ;
un code de programme informatique pour faire en sorte que l'agent utilisateur reçoive une transmission de message multimédia en réponse à la demande d'extraction de message multimédia ;
un code de programme informatique pour faire en sorte que l'agent utilisateur obtienne, à partir de la transmission de message multimédia reçue, un descripteur indiquant une localisation dans le réseau ;
un code de programme informatique pour faire en sorte que l'agent utilisateur obtienne des données de description de session générées conformément aux informations d'adaptation de transmission en continu, à partir de la localisation indiquée par le descripteur ; et
un code de programme informatique pour faire en sorte que l'agent utilisateur établisse une session de transmission en continu conformément aux données de description de session pour extraire un composant de média pouvant être transmis en continu.
